# EUROPEAN PATENT APPLICATION

(11) **EP 4 817 401 A1**
(43) Date of publication of application: **07.10.2026**
(21) Application number: 26169812.0
(22) Date of filing: 31.03.2026
(51) Int. Cl.: A01F 15/07, B65B 11/58

(54) **A BALER AND A METHOD FOR CIRCUMFERENTIALLY WRAPPING A BALE IN A BALER**

(30) Priority: 31.03.2025 IE S20250130
(71) Applicant: McHale Engineering Unlimited Company, Ballinrobe, County Mayo (IE)
(72) Inventor: McHale, Padraic, Christopher, Tumneenane, Clonbur, County Galway, (IE); McHale, Martin, William, Kilmaine Village, Kilmaine, County Mayo, (IE); McHale, Paul, Gerard, 13 Riverside, Woodquay, Galway, (IE); Biggins, John, Patrick, 30 Hillcrest, Claremorris, County Mayo, (IE); Collins, Donal, Patrick, Gortnagoyne, Dunmore, County Galway, (IE); Warren, John, Alexander, Coolylaughnan, Hollymount, County Mayo, (IE); Shanahan, Conor, Paul, Claggan, Ballycroy, Westport, County Mayo, (IE); Heaney, James, John, Ballyglass, Scardaune, Claremorris, County Mayo, (IE)
(74) Representative: Gorman, Francis Fergus

(57) **Abstract**

A bale (2) in a bale chamber (25) of a roller baler (8) is circumferentially wrapped by two sheets (53) of plastics film. As circumferential wrapping of a bale (2) currently in the bale chamber (25) is nearing completion, the two sheets (53) are bundled together by a pair of bundling elements (85) to form a single bundled portion (84). A severing mechanism (91) severs the single bundled portion (84) intermediate its ends forming a single bundled tail portion (84a) which is wrapped onto the bale (2) currently in the bale chamber (25), and a single bundled lead-in portion (90) for the commencement of wrapping of the next bale (2) in the bale chamber (25). Circumferential wrapping of the next bale (2) now in the bale chamber (25) is commenced by dispensing the single bundled lead-in portion (90) into the bale chamber (25). On the single bundled lead-in portion (90) being formed to a predefined length, the bundling elements (85) are urged from the operative state to an inoperative state thereby allowing the sheets (53) to spread transversely relative to the direction of movement thereof so that the two sheets (53) are circumferentially applied to the rotating bale (2) with inner side edges (56a) overlapping, and outer side edges extending around axially opposite end edges (58) of the bale (2). One guide plate (105) located adjacent the infeed opening (28) urges the single bundled lead-in portion (90) against the circumferential surface (51) of the bale (2) to prevent it exiting through the infeed outlet (28).

## Description

The present invention relates to a baler, and in particular to a baler of the type configured to produce a cylindrical bale of material, and the invention also relates to a method for circumferentially wrapping a cylindrical bale in a bale chamber of a baler.

Balers for forming cylindrical bales, commonly referred to as round bales, are well known. Such balers may be of the type commonly referred to as roller balers, or belt balers, or indeed, balers comprising a combination of rollers and belts. In a roller baler, a bale chamber is defined by a plurality of bale rotating rollers circumferentially spaced apart around and defining the bale chamber. The bale rotating rollers are driven in rotation to rotate the material to be baled within the bale chamber and to press and form the material into a cylindrical bale. Belt balers, on the other hand, in general comprise a plurality of side-by-side spaced apart belts passed around fixed and tensioning rollers which are configured to define a cylindrical bale chamber of increasing diameter as material to be baled is fed into the bale chamber. One or more of the fixed rollers about which the belts are passed are driven for in turn driving the belts to rotate the bale in the bale chamber.

Typically, such roller or belt balers are provided for baling crop material, for example, hay, silage, straw and other such stalky materials, into large cylindrical bales commonly referred to as round bales for animal fodder or bedding. Such cylindrical bales, typically are of axial length in the range of 1,000mm to 1,300mm, and more typically, are of axial length in the range of 1,100mm to 1,300mm. Such cylindrical bales are typically of diameter in the range of 500mm to 2,000mm, and more typically, are of diameter in the range of 1,100mm to 1,400mm. Needless to say, such balers may be used for baling other materials besides fodder and bedding materials for animals, for example, such balers may be used for baling waste materials into cylindrical bales, and indeed, any other material suitable for forming into a cylindrical bale.

On completion of the formation of a bale in the bale chamber of such balers, the formed bale must be circumferentially wrapped in order to retain the bale in its cylindrical form, and to avoid the bale falling apart or unravelling on discharge from the bale chamber. Typically, such bales are wrapped with a single sheet of wrapping material, which may be a net wrapping material or a single sheet of plastics film wrapping material. In order to adequately circumferentially wrap the bale in the bale chamber, the wrapping material must be of width at least equal to the axial length of the cylindrical bale, and in the case of a bale of axial length of approximately 1,250mm, the width of the wrapping film must also be approximately 1,380mm, and indeed in some cases of width greater than 1,380mm in order to partly extend around opposite axial end edges of the bale. Such sheet wrapping material is provided in rolls thereof, and in order to provide rolls of adequate length to maximise the number of bales circumferentially wrapped by a roll of wrapping material, and in turn minimise the frequency with which the roll of wrapping material must be replaced, such rolls can be quite heavy and may be of weight up to 40kg, which in general, require two people to lift and place the roll onto the baler. While the weight of the roll of wrapping film material may be reduced by reducing the length of wrapping material contained in the roll, by reducing the length of wrapping material, the frequency with which the roll must be replaced during a baling session is increased. Replacing a roll of wrapping material on a baler requires the baler to be brought to a halt, which in turn results in down-time, which is therefore undesirable.

Additionally, many balers are provided with an integral bale wrapper, which is configured for receiving a circumferentially wrapped bale from the bale chamber and for wrapping the circumferentially wrapped bale by end-to-end wrapping thereof, so that the bale is completely wrapped and enclosed in an envelope of the wrapping material. However, such bale wrappers, in general, are configured to end-to-end wrap the bale in wrapping film of plastics material, which in general, is of width of approximately 750mm. Thus, in combined baler/bale wrappers, rolls of wrapping material of two lengths, namely, 750mm for the bale wrapper and rolls of 1,380mm for circumferentially wrapping the bale in the bale chamber are required. This is undesirable, and leads to considerable inefficiencies in the operation of a combined baler/bale wrapper.

There is therefore a need for a baler which addresses at least one of these problems, and there is also a need for a method for circumferentially wrapping a bale in a bale chamber, which also addresses at least one of the above problems.

The present invention is directed towards providing a baler which addresses at least one of the above problems, and the invention is also directed towards a method for circumferentially wrapping a cylindrical bale in a bale chamber of a baler which addresses at least one of the above problems.

According to the invention there is provided a method for circumferentially wrapping a bale rotating about a rotational axis in a bale chamber of a baler, the method comprising dispensing at least two sheets of wrapping material from respective rolls thereof into the bale chamber onto a circumferential surface of the rotating bale with the at least two sheets located side-by-side, or with adjacent edges of adjacent sheets thereof overlapping on the circumferential surface of the rotating bale, each sheet being of width less than the axial length of the bale, wherein the method further comprises bundling the at least two sheets together to form a single bundled portion adapted to form a single bundled lead-in portion of width less than the combined widths of the at least two sheets of wrapping material, and initially feeding the single bundled lead-in portion into the bale chamber to commence circumferential wrapping of the bale.

In one embodiment of the invention the at least two sheets of the wrapping material are bundled together to form the single bundled lead-in portion of width in a direction substantially parallel to the rotational axis of the rotating bale less than the width of a single one of the at least two sheets of the wrapping material, and preferably, the at least two sheets are bundled together to form the single bundled lead-in portion to have a width lying in the range of 5mm to 50mm, and advantageously, a width lying in the range of 10mm to 30mm, and ideally, a width of approximately 14mm.

In one embodiment of the invention the bundling of the at least two sheets together to form the single bundled lead-in portion comprises urging the outer side edge of one of the outermost sheets of the at least two sheets towards the outer side edge of the other outermost one of the at least two sheets to gather the material of the at least two sheets between the outer side edges of the outermost sheets of the at least two sheets.

In another embodiment of the invention in which the bundling of the sheets together to form the single bundled lead-in portion thereof comprises urging the outer side edges of the respective outermost sheets of the at least two sheets towards each other to form the single bundled lead-in portion at a location substantially midway between the outer side edges of the outermost sheets of the at least two sheets so that the single bundled lead-in portion is applied to the circumferential surface of the rotating bale in the bale chamber substantially midway between the radial opposite ends of the bale.

Preferably, the bundling of the at least two sheets together to form the single bundled lead-in portion is carried out prior to dispensing the at least two sheets into the bale chamber.

In one embodiment of the invention the at least two sheets are bundled together to form the single bundled lead-in portion at a location substantially midway between the outer side edges of the outermost sheets of the at least two sheets so that the single bundled lead-in portion is applied to the circumferential surface of the bale in the bale chamber substantially midway between the radial opposite ends of the bale.

In one embodiment of the invention the bundling of the at least two sheets together is carried out until the single bundled lead-in portion is of a predefined length.

In another embodiment of the invention the predefined length of the single bundled lead-in portion lies in the range of 200mm to 1200mm, and preferably, the predefined length of the single bundled lead-in portion lies in the range of 300mm to 800mm, and advantageously, the predefined length of the single bundled lead-in portion is approximately 500mm.

In another embodiment of the invention on completion of bundling of the at least two sheets of wrapping material, the at least two sheets are spread transversely relative to the direction of movement of the at least two sheets, so that the at least two sheets are located side-by-side, or with adjacent sheets of the at least two sheets overlapping, and the outer side edges of the of the outermost sheets of the at least two sheets are positioned for applying to the circumferential surface of the rotating bale or extending partly around respective axially opposite end edges of the rotating bale, and preferably, if the outer side edges of the outermost sheets of the at least two sheets are applied to the circumferential surface of the rotating bale, the outer side edges of the outermost sheets are applied to the circumferential surface of the rotating bale towards or adjacent the respective axially opposite end edges thereof.

In another embodiment of the invention the at least two sheets of the wrapping material are passed over an elongated main support element extending substantially parallel to the rotational axis of the rotating bale in the bale chamber for spreading the at least two sheets of wrapping material transversely relative to the direction of movement of the at least two sheets on completion of bundling of the at least two sheets together to form the single bundled lead-in portion. Preferably, the at least two sheets of the wrapping material are passed over the main support element prior to bundling thereof, so that on completion of the bundling, the at least two sheets are spread along the main support element transversely relative to the direction of movement of the at least two sheets.

In one embodiment of the invention the at least two sheets are bundled together after being passed over the main support element and before being dispensed into the bale chamber.

Preferably, the main support element comprises a main support roller, and advantageously, a rotatable main support roller, and ideally, a freely rotatable main support roller.

In another embodiment of the invention the at least two sheets of the wrapping material are passed over an elongated intermediate support element extending substantially parallel to the rotational axis of the rotating bale in the bale chamber, and are brought together from the rolls thereof on the intermediate support element prior to being passed over the main support element.

In one embodiment of the invention the intermediate support element comprises an intermediate support roller, and advantageously, a rotatable intermediate support roller, and ideally a freely rotatable intermediate support roller.

In one embodiment of the invention the rolls from which the respective sheets of wrapping material are supplied define respective rotational axes about which the rolls are rotatable for supplying the sheets of wrapping material therefrom, and preferably, the rolls of the at least two sheets of the wrapping material are located with the rotational axes thereof extending substantially parallel to the rotational axis of the rotating bale in the bale chamber.

Preferably, the rotational axes of the rolls from which adjacent sheets of wrapping material are drawn are spaced apart perpendicularly from each other to accommodate overlapping of the adjacent sheets thereof.

Advantageously, the rolls, from which pairs of respective adjacent sheets of the wrapping material are drawn of the at least two sheets thereof, are spaced apart perpendicularly from each other to accommodate overlapping of adjacent side edges of the adjacent sheets thereof.

Preferably, adjacent ends of adjacent ones of the rolls from which adjacent sheets of wrapping material are drawn are offset in an axial direction relative to each other to accommodate overlapping of the adjacent side edges of the adjacent sheets.

In one embodiment of the invention the bale chamber defines a main central axis, and preferably, the rotational axis about which the bale is rotated in the bale chamber coincides with the main central axis of the bale chamber.

In one embodiment of the invention each sheet of the at least two sheets of wrapping material is tensioned, and preferably, is tensioned as it is being drawn from the corresponding roll thereof.

In one embodiment of the invention the bale is rotated in the bale chamber of a roller baler by a plurality of rotatably mounted bale rotating rollers defining the bale chamber, and preferably, the single bundled lead-in portion of the at least two sheets of the wrapping material is dispensed into the bale chamber through a gap defined between a pair of the bale rotating rollers. Advantageously, the single bundled lead-in portion of the at least two sheets of the wrapping material is drawn into the bale chamber between the rotating bale and the bale rotating rollers by the cooperating action between the rotating bale and the bale rotating rollers in the bale chamber.

Preferably, the single bundled lead-in portion of the at least two sheets of wrapping material is guided towards the rotating bale in the bale chamber as the single bundled lead-in portion passes an infeed opening into the bale chamber through which material to be baled is fed into the bale chamber.

Preferably, the single bundled lead-in portion of the at least two sheets of the wrapping material is guided towards the rotating bale as the single bundled lead-in portion passes the infeed opening to the bale chamber by a single guide means, and preferably, the single guide means is of width in a direction parallel to the rotational axis of the rotating bale less than the width of the infeed opening in a direction parallel to the rotational axis of the rotating bale, and advantageously, the single guide means is of width in the direction parallel to the rotational axis of the rotating bale in the range of 10% to 20% of the width of the infeed opening in the direction parallel to the rotational axis of the rotating bale, and ideally, not more than 16% of the width of the infeed opening in the direction parallel to the rotational axis of the rotating bale.

In another embodiment of the invention the bundling of the at least two sheets to form the single bundled portion commences as the circumferential wrapping of a rotating bale currently in the bale chamber is nearing completion, and the single bundled portion is adapted to form a single bundled tail portion for circumferentially wrapping onto the bale currently in the bale chamber to complete the circumferential wrapping thereof, and at least a part of the single bundled lead-in portion for the next bale to be circumferentially wrapped in the bale chamber.

In one embodiment of the invention the at least two sheets of wrapping material circumferentially wrapped onto the bale in the bale chamber are severed from the rolls thereof on completion of circumferential wrapping of the bale in the bale chamber.

In one embodiment of the invention the at least two sheets of the wrapping material circumferentially wrapped onto a bale currently in the bale chamber are severed from the rolls of the at least two sheets of the wrapping material adjacent the single bundled portion, and preferably, the at least two sheets of wrapping material wrapped onto the bale currently in the bale chamber are severed from the rolls thereof intermediate the ends of the single bundled portion to form the single bundled tail portion for the bale currently in the bale chamber and at least the part of the single bundled lead-in portion for the next bale to be circumferentially wrapped in the bale chamber.

The invention also provides a baler comprising a bale chamber adapted to rotate, press and form material into a cylindrical bale, the bale chamber defining a main central axis about which the bale is rotated therein, and a dispensing means adapted to dispense at least two sheets of wrapping material from respective rolls thereof into the bale chamber onto a circumferential surface of a rotating bale therein for circumferential wrapping of the bale with the at least two sheets located side-by-side, or with adjacent side edges of adjacent sheets overlapping on the circumferential surface of the bale, each sheet being of width less than the axial length of the bale, and a bundling means adapted to bundle the at least two sheets together to form a single bundled portion adapted to form a single bundled lead-in portion of width less than the combined width of the at least two sheets for feeding initially into the bale chamber to commence circumferential wrapping of the bale.

In one embodiment of the invention the bundling means is adapted to bundle the at least two sheets together to form the single bundled lead-in portion to be of width less than the width of a single one of the at least two sheets, and preferably, the bundling means is adapted to bundle the at least two sheets together to form the single bundled lead-in portion to have a width lying in the range of 5mm to 50mm, and advantageously, a width lying in the range of 10mm to 30mm, and ideally, a width of approximately 14mm.

In one embodiment of the invention the bundling means is adapted for urging the outer side edge of one of the outermost sheets of the at least two sheets towards the outer side edge of the other outermost sheet of the at least two sheets thereof to gather the material of the at least two sheets between the outer side edges of the outermost sheets of the at least two sheets to form the single bundled lead-in portion.

In another embodiment of the invention the bundling means is adapted to urge the outer side edges of the outermost sheets of the at least two sheets towards each other to gather the material of the at least two sheets between the outer side edges of the outermost sheets of the at least two sheets to form the single bundled lead-in portion.

Preferably, the bundling means is adapted to bundle the at least two sheets together to form the single bundled lead-in portion at a location intermediate the outer side edges of the outermost sheets of the wrapping material, and advantageously, the bundling means is adapted to bundle the at least two sheets together to form the single bundled lead-in portion at a location substantially midway between the outer side edges of the outermost sheets of the at least two sheets, so that the single bundled lead-in portion when applied to the circumferential surface of the rotating bale in the bale chamber is applied to the circumferential surface of the bale substantially midway between the radial opposite ends of the bale.

In another embodiment of the invention the bundling means comprises at least one bundling element engageable with the outer side edge of one of the outermost sheets of the at least two sheets, and preferably, the at least one bundling element is urgeable from an inoperative state disengaged from the said outer side edge of the corresponding outermost sheet of the at least two sheets to an operative state urging the said outer side edge of the said one of the outermost sheets of the at least two sheets towards the outer side edge of the other one of the outermost sheets of the at least two sheets.

Preferably, the bundling means comprises a pair of the bundling elements urgeable from respective inoperative states thereof spaced apart from each other and from the adjacent corresponding outer side edges of the outermost sheets of the at least two sheets of wrapping material towards each other to respective operative states thereof, and preferably, the bundling elements are urgeable into the operative state with the bundling elements located adjacent each other, and advantageously, intermediate the respective inoperative states thereof, and ideally, the bundling elements are urgeable into the operative state at a location substantially midway between the respective inoperative states thereof.

In one embodiment of the invention each bundling element comprises a rotatably mounted bundling element, and advantageously, a rotatably mounted bundling roller, and preferably, each bundling roller is provided with a circumferential groove extending circumferentially around the periphery of the bundling roller for engaging the outer side edge of the corresponding outermost sheet of the at least two sheets. Advantageously, the groove extending around each bundling roller is of arcuate cross-section.

Preferably, each bundling element is urgeable between the inoperative state and the operative state in respective opposite directions transversely of the direction of movement of the at least two sheets and parallel to the main central axis defined by the bale chamber.

Preferably, each bundling element is urgeable between the inoperative state and the operative state by a corresponding first urging means, and advantageously, each first urging means comprises a bundling element actuator.

In one embodiment of the invention each bundling element is urgeable by a corresponding bundling element actuator between the inoperative state and the operative state thereof, and preferably, each bundling element is mounted on the corresponding bundling element actuator. Preferably, each bundling element actuator comprises a hydraulically powered bundling element actuator.

Advantageously, the bundling means is located upstream of the dispensing means relative to the direction of movement of the sheets for bundling the at least two sheets together to form the single bundled lead-in portion prior to being dispensed by the dispensing means into the bale chamber.

Preferably, the bundling means is adapted to commence bundling the at least two sheets of wrapping material to form a single bundled portion thereof as the circumferential wrapping of the bale currently in the bale chamber is nearing completion, and the single bundled portion comprises a downstream single bundled portion adapted to form a single bundled tail portion for circumferentially wrapping onto the bale currently in the bale chamber to complete the circumferential wrapping thereof, and an upstream single bundled portion adapted to form at least a part of a single bundled lead-in portion for the next bale to be circumferentially wrapped in the bale chamber.

In one embodiment of the invention each bundling element actuator is responsive to the single bundled lead-in portion being formed to a predefined length to operate the corresponding bundling element from the operative state to the inoperative state thereof to terminate bundling of the at least two sheets of the wrapping material.

Preferably, the predefined length of the single bundled lead-in portion lies in the range of 200mm to 1200mm, and advantageously, the predefined length of the single bundled lead-in portion lies in the range of 300mm to 800mm, and ideally, the predefined length of the single bundled lead-in portion is approximately 500mm.

Preferably, an elongated main support element extending parallel to the main central axis defined by the bale chamber is located upstream of the bundling means for supporting the at least two sheets upstream of the bundling means, and for spreading the at least two sheets of the wrapping material transversely of the direction of movement of the at least two sheets along the main support element when the bundling elements are in the inoperative state.

Preferably, the main support element is located spaced apart above, and preferably, spaced apart substantially directly above the bundling means.

In one embodiment of the invention the main support element comprises a rotatable main support element, and preferably, a rotatably mounted main support roller defining a rotational axis extending substantially parallel to the main central axis defined by the bale chamber. Advantageously, the main support roller is freely rotatable.

In another embodiment of the invention the bundling means is located between the main support element and the dispensing means, and advantageously, the bundling means is located spaced apart above the dispensing means, and preferably, spaced apart substantially directly above the dispensing means.

Advantageously, the main support element, the bundling means and the dispensing means are substantially vertically aligned with each other.

In one embodiment of the invention a severing means is provided for severing the at least two sheets of wrapping material circumferentially wrapped onto the bale in the bale chamber from the rolls thereof.

In one embodiment of the invention the severing means is adapted for severing the at least two sheets of wrapping material circumferentially wrapped onto the bale in the bale chamber from the corresponding rolls thereof on completion of circumferential wrapping of the bale in the bale chamber.

In one embodiment of the invention the severing means is located downstream of the dispensing means in the direction of movement of the sheets of the wrapping material for severing the at least two sheets thereof circumferentially wrapped onto a bale currently in the bale chamber from the rolls thereof adjacent the single bundled portion, and preferably, the severing means is adapted to sever the at least two sheets of the wrapping material circumferentially wrapped onto the bale currently in the bale chamber from the rolls of the at least two sheets of the wrapping material intermediate the ends of the single bundled portion to form a single bundled tail portion and at least a part of the single bundled lead-in portion for the next bale to be circumferentially wrapped in the bale chamber.

In another embodiment of the invention an elongated intermediate support element extending parallel to the main central axis defined by the bale chamber is located intermediate the main support element and the respective rolls of the at least two sheets of the wrapping material, the intermediate support element being adapted to merge the at least two sheets into a substantially common plane with the at least two sheets located side-by-side, or with adjacent side edges of adjacent sheets of the at least two sheets overlapping each other. Preferably, the intermediate support element comprises an intermediate support roller, and advantageously, a rotatably mounted intermediate support roller, and ideally, a freely rotatably mounted intermediate support roller.

In one embodiment of the invention a single guide means is located adjacent a material infeed opening through which the material to be baled is fed into the bale chamber, the guide means being adapted for directing the single bundled lead-in portion of the at least two sheets of the wrapping material inwardly towards the circumferential surface of the bale as the single bundled lead-in portion is passing the infeed opening, and preferably, the single guide means is of width in a direction parallel to the main central axis defined by the bale chamber less than the width of the infeed opening in the direction parallel to the main central axis defined by the bale chamber, and advantageously, the single guide means is of width in the direction parallel to the main central axis defined by the bale chamber in the range of 10% to 20% of the width of the infeed opening in the direction parallel to the main central axis defined by the bale chamber, and ideally, the single guide means is of width in the direction parallel to the main central axis defined by the bale chamber not more than 16% of the width of the infeed opening in the direction parallel to the main central axis defined by the bale chamber.

Preferably, the infeed opening is of width in a direction parallel to the main central axis defined by the bale chamber substantially similar to the width of the bale chamber in the direction parallel to the main central axis defined by the bale chamber.

In another embodiment of the invention the dispensing means comprises a drive roller and a cooperating pinch roller, the drive roller and the cooperating pinch roller extending substantially parallel to the main central axis defined by the bale chamber, and the drive roller and the pinch roller are adapted for accommodating the at least two sheets of the wrapping material therebetween for urging the at least two sheets into the bale chamber onto the circumferential surface of the bale.

In another embodiment of the invention the at least two sheets of the wrapping material are supplied from the respective rolls thereof, and advantageously, the respective rolls of the at least two sheets thereof are rotatably supported about respective rotational axes extending parallel to the main central axis defined by the bale chamber. Advantageously, the rotational axes of the rolls of adjacent sheets of the at least two sheets of wrapping material are spaced apart perpendicularly from each other to accommodate overlapping of adjacent side edges of the adjacent sheets.

Preferably, adjacent ends of adjacent ones of the rolls from which adjacent sheets of wrapping material are drawn are offset in an axial direction relative to each other to accommodate overlapping of the adjacent side edges of the adjacent sheets.

In one embodiment of the invention a tensioning means is provided for tensioning the at least two sheets, and preferably, the tensioning means is located adjacent the respective rolls of the at least two sheets, the tensioning means being adapted to tension each sheet as it is drawn from the corresponding roll thereof. Preferably, the tensioning means are provided adjacent the respective rolls of the at least two sheets for tensioning the corresponding sheet as it is being drawn from the corresponding roll.

In one embodiment of the invention each tensioning means comprises a tensioning roller for tensioning the corresponding sheet of wrapping material as it is being drawn from the corresponding roll thereof.

In one embodiment of the invention as the sheets of wrapping material are being drawn from the respective rolls thereof, the sheets are drawn partly around the respective tensioning rollers.

In one embodiment of the invention a braking means is provided corresponding to each tensioning roller for applying a braking force to rotation of the tensioning roller. Advantageously, the braking means of each tensioning roller is adapted to apply a variable braking force to the tensioning roller. Preferably, the braking force applied to each tensioning roller by the corresponding braking means is selectable for determining the tension induced in the sheet drawn from the corresponding roll thereof.

In one embodiment of the invention the braking means comprises an hydraulic brake which preferably, comprises an hydraulic pump rotatably driven by the corresponding tensioning roller, and advantageously, hydraulic fluid outputted by each hydraulic pump is passed through an adjustable flow control valve for altering the flow of hydraulic fluid therethrough for in turn altering the braking force applied to the corresponding tensioning roller.

In one embodiment of the invention the baler comprises a roller baler comprising a plurality of rotatably mounted bale rotating rollers defining the bale chamber, and preferably, the dispensing mechanism is adapted to dispense the bundled lead-in portion of the at least two sheets of the wrapping material into the bale chamber through a gap defined between a pair of the bale rotating rollers.

In one embodiment of the invention the wrapping material comprises a film material, and preferably, a film material of plastics, and advantageously, the film material is adhesive coated on one major surface thereof.

The advantages of the invention are many. Firstly, by circumferentially wrapping the bale in the bale chamber with two or more sheets of wrapping material arranged side-by-side or overlapping, the weight of the rolls of the wrapping material for the same number of bales, which would be circumferentially wrapped by a single sheet of wrapping material, is significantly reduced, so that the rolls of the wrapping material for circumferentially wrapping the bale in the bale chamber can be easily managed by a single person. Secondly, by bundling all the sheets of the wrapping material for circumferentially wrapping the bale in the bale chamber into a single bundled lead-in portion, only one single guide element is required for guiding the lead-in portion past the infeed opening to the bale chamber, thereby minimising any impediment to feeding of crop material or other material to be baled into the bale chamber through the infeed opening. Thirdly, since only one single bundled portion is formed from the sheets of wrapping material, the risk of the single bundled lead-in portion passing out of the bale chamber through the infeed opening or between adjacent bale rotating rollers is halved in cases where the bale is being circumferentially wrapped by two sheets of wrapping material, and is reduced by a factor of three in cases where the bale is being circumferentially wrapped by three sheets of wrapping material, and so on.

A further advantage of the invention is achieved when the invention is applied to a combined baler/bale wrapper in that the axial length of the rolls of the wrapping material for circumferentially wrapping the bale in the bale chamber and for end-to-end wrapping of the bale by the bale wrapper may be of the same axial length, and ideally, may also be of the same material, thereby, avoiding the need to provide rolls of the same material of different lengths for circumferentially wrapping the bale in the bale chamber and for end-to-end wrapping of the bale on the bale wrapper. Thereby, the stock of rolls to be stored may be significantly reduced.

The invention will be more clearly understood from the following description of a preferred embodiment thereof which is given by way of the following non-limiting example with reference to the accompanying drawings, in which:
Fig. 1 is a front perspective view of a combined baler/bale wrapper according to the invention, comprising a baler also according to the invention and a bale wrapper,
Fig. 2 is a rear perspective view of the combined baler/bale wrapper of Fig. 1,
Fig. 3 is a side elevational view of the combined baler/bale wrapper of Fig. 1,
Fig. 4 is a cross-sectional side elevational view of the combined baler/bale wrapper of Fig. 1,
Fig. 5 is a rear perspective view of the baler of the combined baler/bale wrapper of Fig. 1,
Fig. 6 is a front perspective view of a portion of the combined baler/bale wrapper of Fig. 1,
Fig. 7 is an enlarged cross-sectional side elevational view of the baler of the combined baler/bale wrapper of Fig. 1,
Fig. 8 is another cross-sectional side elevational view of the baler of the combined baler/bale wrapper of Fig. 1 in a different state to that of Fig. 7,
Fig. 9 is a perspective view of a detail of a portion of the baler of the combined baler/bale wrapper of Fig. 1,
Fig. 10 is a schematic cross-sectional side elevational view of a portion of the baler of the combined baler/bale wrapper of Fig. 1,
Fig. 11 is a schematic side elevational view of a detail of the portion of Fig. 10 of the combined baler/bale wrapper of Fig. 1,
Fig. 12 is an enlarged perspective view of another detail of the baler of the combined baler/bale wrapper of Fig. 1,
Fig. 13 is a perspective view similar to that of Fig. 12 illustrating parts of the detail of Fig. 12 in a different state to that of Fig. 12,
Fig. 14 is a perspective view of another part of the detail of Fig. 10 illustrated in use,
Fig. 15 is a view similar to Fig. 14 illustrating the detail of Fig. 14 in a different stage to that of Fig. 14 in use, and
Fig. 16 is a view similar to Fig. 14 illustrating the detail of Fig. 14 in a further different state to that of Fig. 14 in use.

Referring to the drawings there is illustrated a combined baler/bale wrapper according to the invention indicated generally by the reference numeral 1 for forming crop material, in this case, grass silage into a cylindrical bale 2, and for wrapping the bale 2 in plastics film material to form an airtight envelope within which the formed bale is sealed. A combined baler/bale wrapper of the type similar to that of the combined baler/bale wrapper 1 is described in PCT Specification No. WO2002/076183 and accordingly, only the parts of the baler/bale wrapper 1 which are relevant to the invention will be described in detail.

The baler/bale wrapper 1 comprises a chassis 3 supported on a pair of spaced apart ground engaging wheels 5. A pair of converging tow bars 6 extend forwardly from the chassis 3 and terminate in a coupler 7 for coupling to a prime mover, for example, a tractor (not shown) for towing the baler/bale wrapper 1. A baler also according to the invention and indicated generally by the reference numeral 8 within which crop material is rotated, pressed and formed into the cylindrical bale 2 is mounted on the chassis 3. A bale wrapper 10 onto which a formed bale is transferred from the baler 8 is located on the chassis 3 rearwardly of the baler for end-to-end wrapping of the bale 2.

The baler 8 comprises three segments, namely, a fixed segment 12, a discharge segment 14 and a closure segment 16. The fixed segment 12 comprises a pair of spaced apart side walls 17 which are fixed to the chassis 3. The discharge segment 14 comprises a pair of spaced apart side walls 18 which are pivotally coupled to the chassis 3 about a first pivot axis 19. The closure segment 16 comprises a pair of spaced apart side walls 20 which are pivotally coupled to the fixed side wall 17 about a second pivot axis 21. The side walls 20 of the closure segment 16 are secured together by a plurality of transversely extending struts 22 extending between the side walls 20. The side walls 18 of the discharge segment 14 are also secured together by transversely extending struts (not shown) which are similar to the struts 22 which secure the side walls 20 of the closure segment 16 together.

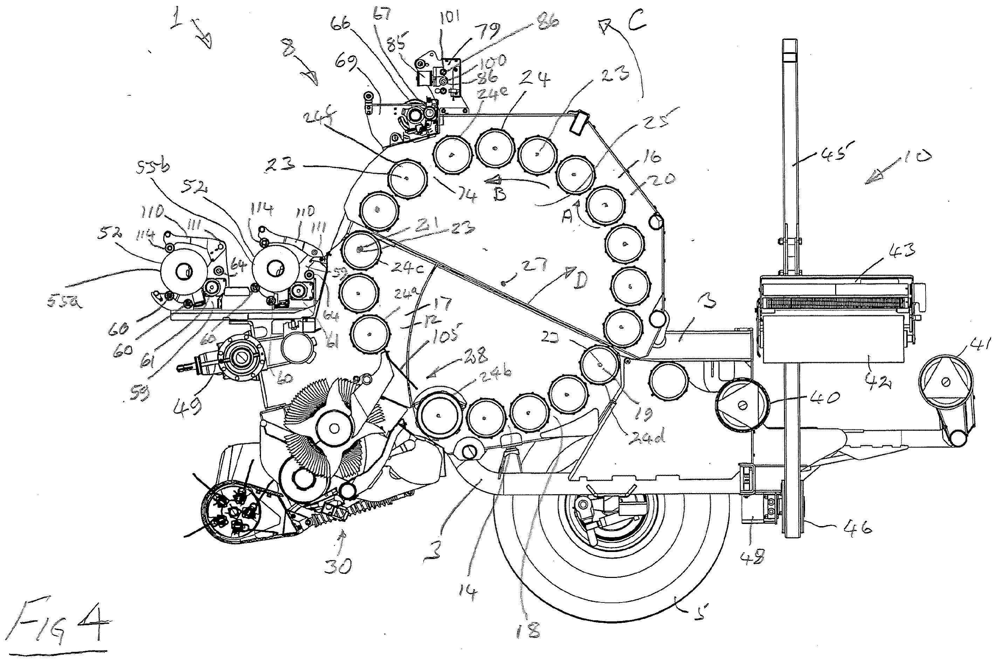

The side walls 17, 18 and 20 of the fixed segment 12, the discharge segment 14 and the closure segment 16, respectively, carry a plurality of circumferentially arranged bale rotating rollers 24, which together define a bale chamber 25 within which the crop material is rotated, pressed and formed into the cylindrical bale 2. The bale chamber 25 defines a longitudinally extending main central axis 27 extending parallel to the bale rotating rollers 24, about which the crop material and in turn the bale 2 is rotated in the bale chamber 25 by the bale rotating rollers 24. The bale rotating rollers 24 are rotatably mounted in bearings (not shown) in the side walls 17, 18 and 20 about respective rotational axes 23, and are driven in rotation by a drive transmission chain (not shown) cooperating with sprockets (also not shown) mounted fast on shafts 26 of the bale rotating rollers 24 for rotating the bale rotating rollers 24 in the direction of the arrow A, for in turn rotating the crop material and in turn the bale 2 in the bale chamber 25 in the direction of the arrow B, see Fig. 4. The driving of the bale rotating rollers 24 by a drive transmission chain and sprockets will be known to those skilled in the art.

An infeed opening 28 for accommodating crop material into the bale chamber 25 is defined between the bale rotating rollers 24a and 24b. A crop pick-up and feed system 30 picks up crop material from the ground and feeds the crop material into the bale chamber 25 through the infeed opening 28, as will be understood by those skilled in the art.

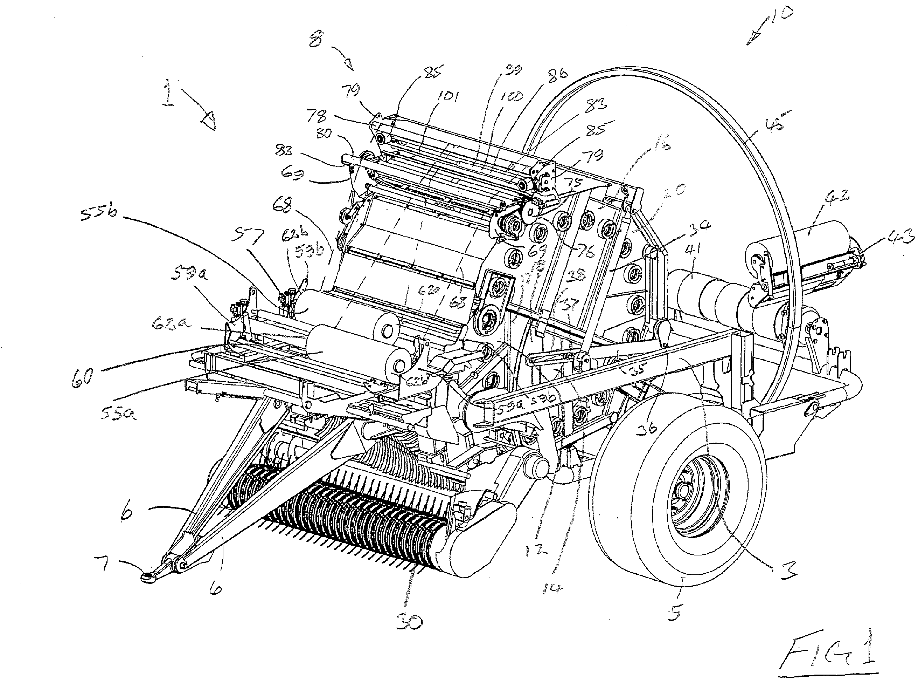

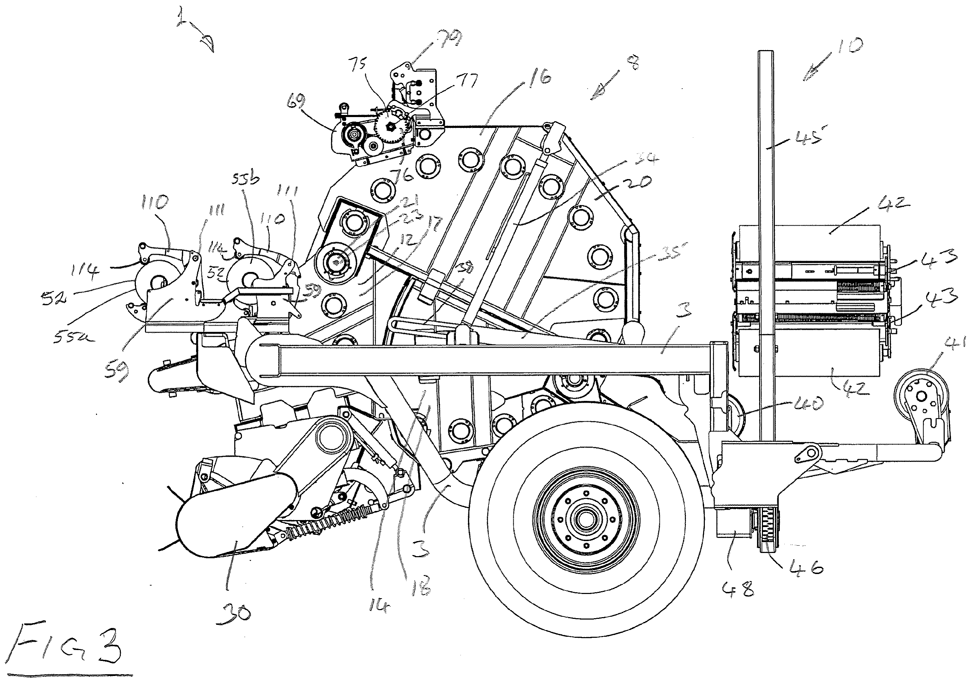

The closure segment 16 is pivotal in the direction of the arrow C about the second pivot axis 21 which is defined by the rotational axis 23, about which the bale rotating roller 24c of the fixed segment 12 is rotatable between a closed bale forming state illustrated in Figs. 1 to 3 and an open state (not shown), for accommodating a bale from the bale chamber 25. The discharge segment 14 is pivotal about the first pivot axis 19, which coincides with the rotational axis 23 of the bale rotating roller 24d, in the direction of the arrow D from a bale forming state illustrated in Figs. 1 to 3 to a discharge state (not shown) for discharging a formed bale which has been circumferentially wrapped in the bale chamber 25, as will be described below, from the bale chamber 25 onto the bale wrapper 10.

A pair of double-acting main rams 34 on respective opposite sides of the baler 8 acting between the chassis 3 and the closure segment 16 operate the closure segment 16 between the closed bale forming state and the open state. A pair of link members 35 on respective opposite sides of the baler 8 pivotally coupled to the closure segment 16 by pivot pins 36 and to the discharge segment 14 by engagement pins 37 operate the discharge segment 14 from the bale forming state to the discharge state as the closure segment 16 is being urged from the closed bale forming state to the open state. The engagement pins 37 slideably engage respective delay slots 38 in the link members 35 for delaying operating of the discharge segment 14 from the bale forming state to the discharge state until the closure segment 16 has been urged a sufficient distance from the closed bale forming state towards the open state to provide sufficient headroom for the bale 2 as the transfer of the bale 2 from the bale chamber 25 onto the bale wrapper 10 commences.

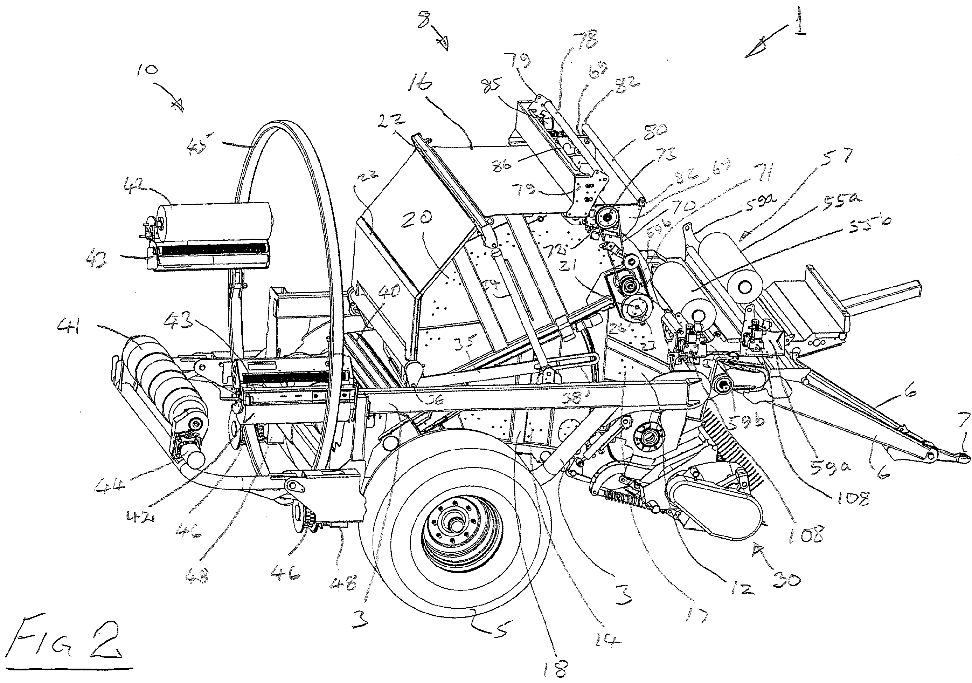

The bale wrapper 10 comprises a pair of spaced apart bale support rollers 40 and 41 extending substantially parallel to the main central axis 27 defined by the bale chamber 25. The bale support rollers 40 and 41 are driven by rotary hydraulic motors 44 for rotating the bale during end-to-end wrapping thereof about the longitudinally extending central axis of the bale. One of the rotary hydraulic motors 44 which drives the bale support roller 41 is illustrated in Fig. 2. A pair of wrapping material dispensers 43 are carried on a support ring 45 rotatably mounted on the chassis 3 for revolving the wrapping material dispensers 43 about a wrapping material dispensing axis defined by the support ring 45. The wrapping material dispensers 43 carry respective rolls 42 of plastics film wrapping material for end-to-end wrapping of the bale 2 being rotated on the bale support rollers 40 and 41. The wrapping material dispensing axis defined by the support ring 45 extends substantially perpendicularly to the longitudinally extending central axis of the bale 2 when supported on the bale support rollers 40 and 41 and intersects the longitudinally extending central axis of the bale 2. The support ring 45 is supported on a pair of rollers 46 located on opposite sides of the chassis 3 and driven by respective hydraulic motors 48 mounted on the chassis 3 for rotating the support ring 45 about the material dispensing axis defined by the support ring 45.

The wrapping material dispensers 43 rotatably carry the respective rolls 42 of the wrapping material for wrapping the bale 2 on the bale wrapper 10. Thus, as the bale is being rotated about its central axis by the rotating bale support rollers 40 and 41, and the support ring 45 is being rotated by the rollers 46 to revolve the rolls 42 of the wrapping material about the rotating bale, the wrapping material is drawn from the rolls 42 thereof by the rotating bale 2 on the bale support rollers 40 and 41 for end-to-end wrapping of the bale in the bale wrapper 10. The plastics film material of the rolls 42 is coated on one side thereof with an adhesive for securing sequential turns of the film material on the bale to each other.

A gear box 49, see Fig. 4, is provided at the forward end of the baler for receiving drive from a tractor or other suitable towing vehicle towing the combined baler/bale wrapper 1. The gear box 49 is adapted to receive drive from the power take-off shaft of the tractor through a Cardan shaft, and to transmit drive to the various drive transmission systems in the baler for rotating the bale rotating rollers 24 and other mechanically driven components of the baler and the crop pick-up and infeed system 30. A hydraulic system of the combined baler/bale wrapper 1 operates the hydraulically powered components of the combined baler/bale wrapper, and is powered by the hydraulic system of the tractor or other towing vehicle towing the bale wrapper. This aspect of the drive transmission of drive from the gear box 49 and the powering of hydraulic components of a combined baler/bale wrapper by the hydraulic system thereof will be well known to those skilled in the art and further description should not be required.

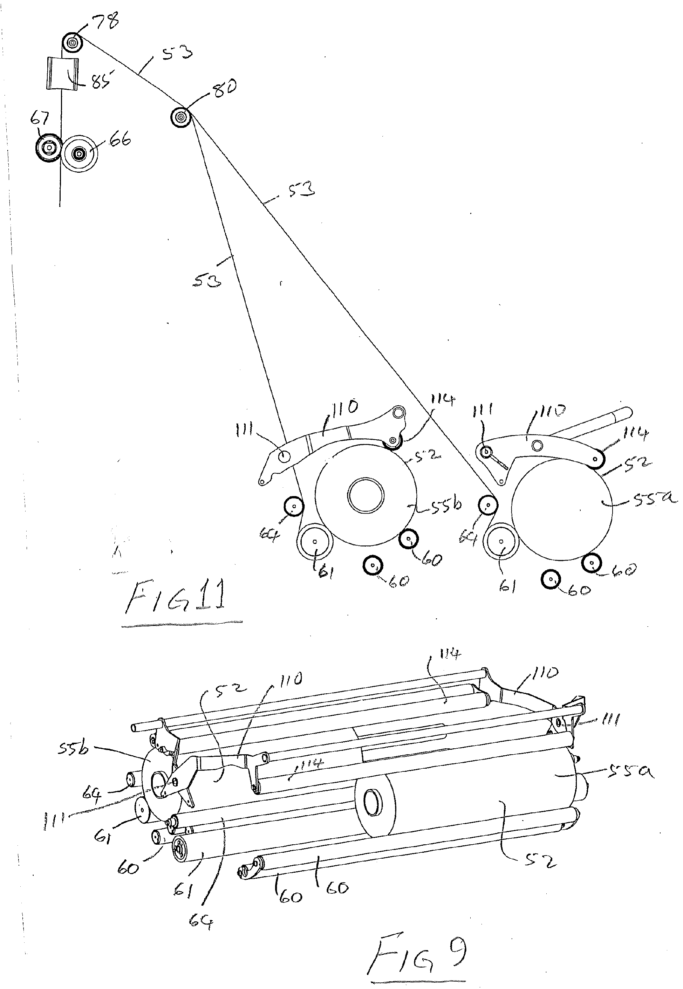

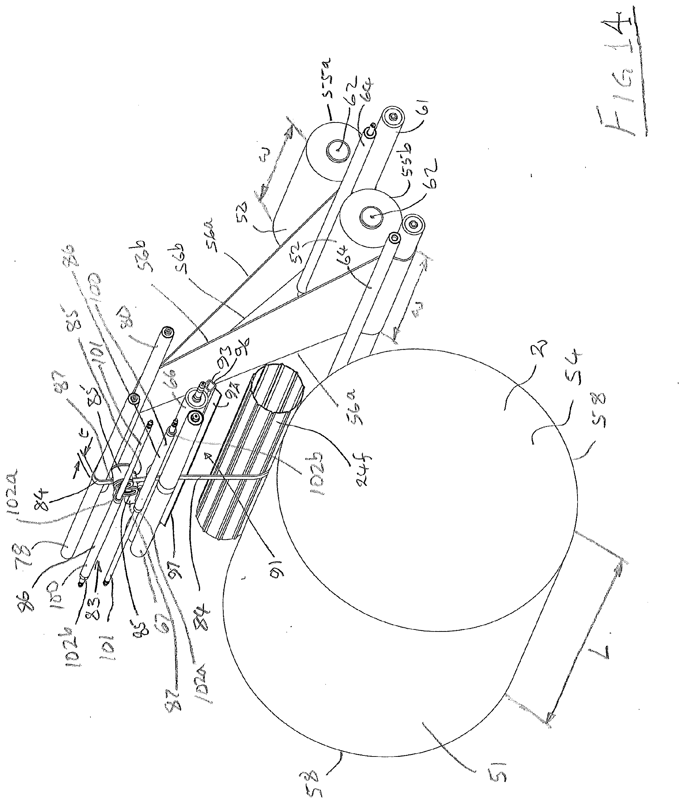

Turning now to the circumferential wrapping of the formed bale 2 in the bale chamber 25 prior to being discharged therefrom onto the bale wrapper 10, the formed bale 2 in the bale chamber 25 is circumferentially wrapped therein by a method according to the invention, as will now be described. The bale 2 is circumferentially wrapped in the bale chamber 25 about the circumferential surface 51 thereof by at least two sheets of wrapping material, in this case, two partly overlapping sheets 53 of wrapping material supplied from respective rolls 55 thereof, see Figs. 1, 6, 10, 11 and 14 to 16. The rolls 55 of the wrapping material are located in a roll accommodating compartment 57 located on the chassis 3, forward of the baler 8, as will be described below. In this embodiment of the invention the sheets 53 of the rolls 55 of the wrapping material comprise plastic film material coated with an adhesive on one major surface thereof for securing sequential turns of the sheets 53 around the bale 2 to each other.

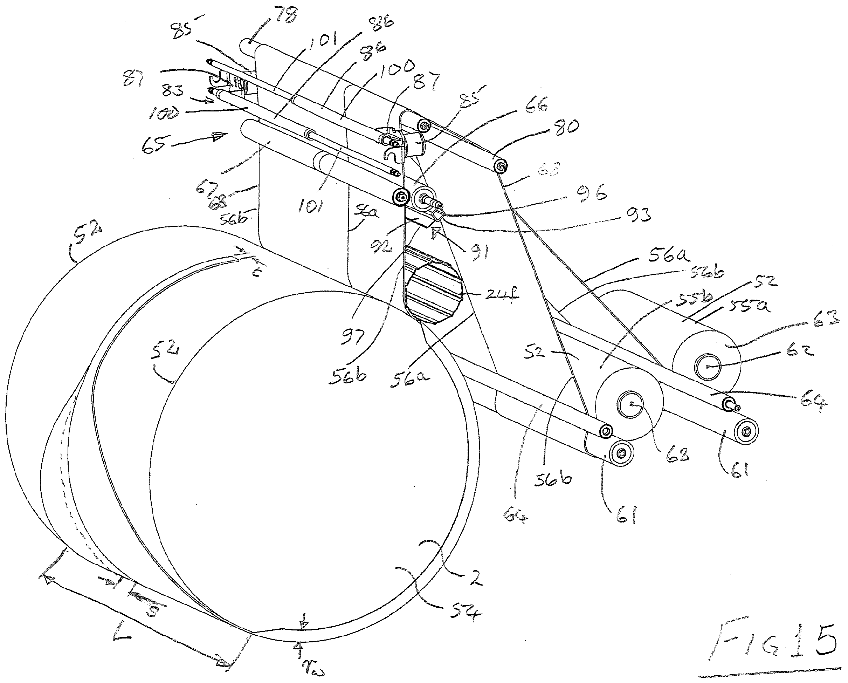

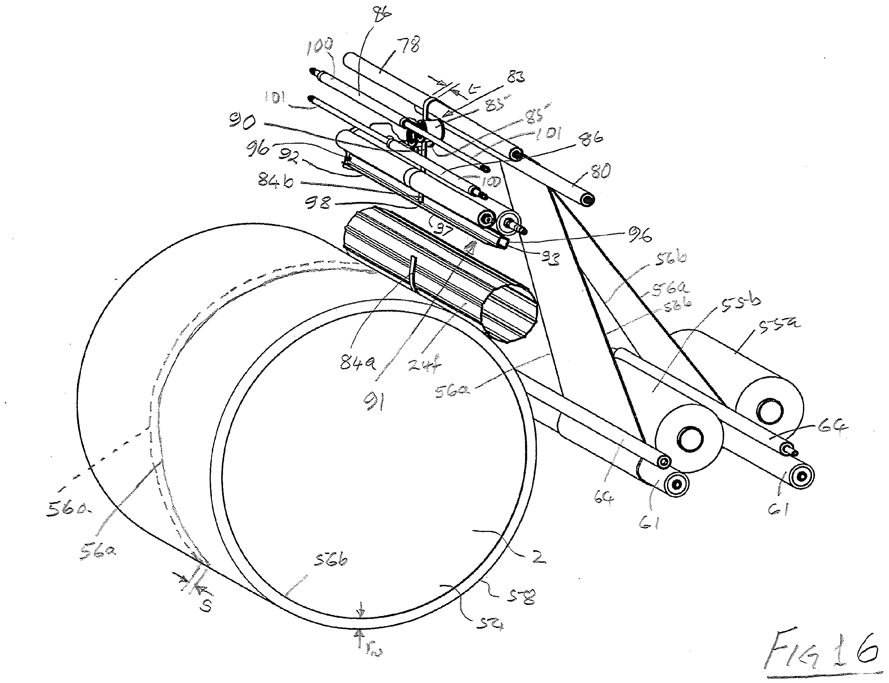

Each sheet 53 defines opposite side edges 56, and the sheets 53 are applied to the circumferential surface 51 of the bale 2 with adjacent inner side edges 56a of the sheets 53 overlapping substantially midway between the axial opposite end edges 58 of the bale 2. Each sheet 53 is of width *w* between its respective opposite side edges 56, which is sufficiently greater than half the axial length *L* of the formed bale 2 between the end edges 58 thereof to provide for the overlapping of the inner side edges 56a thereof, and is also of sufficient width to provide for outer side edges 56b of the sheets 53 to extend around the end edges 58 of the bale 2 onto the adjacent radially opposite ends 54 of the bale 2 a radial distance *r_{w}*, see Figs. 15 and 16. In this embodiment of the invention the axial length L of the bale 2 between the end edges 58 is approximately 1230mm, which is also approximately equal to the axial length of the bale chamber 25. The width *w* of each sheet 53 between the side edges 56 thereof in the unstretched state in the longitudinal direction is approximately 750mm, which provides for an overlap s of the inner side edges 56a of the sheets 53 of approximately 100mm, and depending on the amount the sheets 53 are stretched in the longitudinal direction as the sheets 53 are tensioned in the longitudinal direction in response to the sheets 53 being drawn onto the rotating bale in the bale chamber 25 by the cooperating action between the bale rotating rollers 24 and the rotating bale during circumferential wrapping thereof, as will be described below, the overlaps of the side edges 56a of the sheets 53 may be greater or lesser. The outer side edges 56b of the sheets 53 may or may not extend around the end edges 58 of the bale 2 the radial distance *r_{w},* and depending on the width of the sheets 53 in the longitudinally unstretched state and the degree of longitudinal stretching induced in the sheets 53, the outer side edges 56b of the sheets 53 may extend around the end edges 58 of the bale 2 the distance r*_{w}* of up to 35mm or more. In other embodiments of the invention the widths *w* of the sheets 53 in the longitudinally unstretched state may be such that after longitudinal stretching of the sheets 53, the width of the longitudinally stretched sheets 53 may be insufficient to allow the outer side edges 56b thereof to extend around the end edges 58 of the bale 2 onto the adjacent radial ends 54 thereof, and in which case, it is envisaged that the outer side edges 56b of the sheets 53 may terminate adjacent the end edges 58 of the bale 2, slightly inwardly from the end edges 58 of the bale 2 or towards the end edges of the bale 2 or towards the end edges of the bale 2 on the circumferential surface 51 of the bale in the bale chamber 25.

The roll accommodating compartment 57 comprises two pairs of mounting plate brackets 59 mounted on and extending upwardly from the chassis 3 on opposite sides of the baler 8, see for example Figs. 1 to 4. The plate mounting brackets 59 of each pair thereof are spaced apart and located forwardly of the fixed side wall 17 of the fixed segment 12, and are spaced apart slightly outwardly relative to the fixed side walls 17. Freely rotatable rollers 60 extend parallel to the main central axis 27 defined by the bale chamber 25 and are rotatably carried in bearings (not shown) in the corresponding ones of the pairs of the mounting plate brackets 59 for engaging the circumferential surface 52 of the respective rolls 55 for supporting the rolls 55 thereon between the respective corresponding pairs of the mounting plate brackets 59.

A tensioning roller 61 extends parallel to the main central axis 27 defined by the bale chamber 25 between each pair of the mounting plate brackets 59, and is rotatably mounted in the corresponding pair of the mounting plates 59 in bearings (not shown). The tensioning rollers 61 cooperate with the corresponding freely rotatable rollers 60 for engaging the circumferential surface 52 of the corresponding roll 55 and for supporting the corresponding roll 55 thereon. The tensioning rollers 61 are configured to tension the sheets 53 of the corresponding rolls 55 as the sheets 53 are being drawn from the rolls 55 by the cooperating action between the bale rotating rollers 24 of the bale chamber 25 and the rotating bale 2 therein, during the circumferential wrapping of the bale 2, as will be described below. The freely rotatable rollers 60 and the tensioning rollers 61 are located and configured to rotatably support the respective corresponding rolls 55 so that as the sheets 53 of wrapping material are being drawn therefrom, the rolls 55 rotate about respective rotational axes, which substantially coincide with the central axes 62 of the respective corresponding rolls 55.

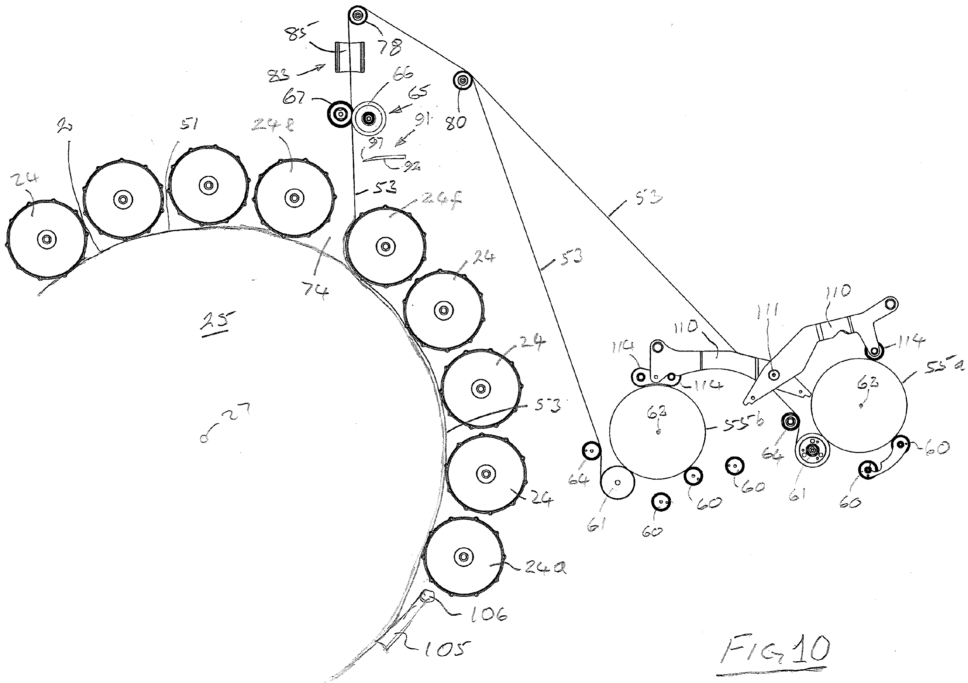

An idler roller 64 extends parallel to the main central axis 27 defined by the bale chamber 25 and between each pair of the mounting plate brackets 59. Each idler roller 64 is rotatably mounted in bearings (not shown) in the corresponding pair of mounting plate brackets 59 and is located spaced apart from and parallel to the corresponding tensioning roller 61. Each idler roller 64 is located at a level above the corresponding tensioning roller 61 for determining the angular distance around which the corresponding sheet 53 of wrapping material must pass around the tensioning roller 61 from the corresponding roll 55, see Figs. 10 and 14 to 16. In this embodiment of the invention each idler roller 64 is located relative to the corresponding tensioning roller 61 so that the corresponding sheet 53 of wrapping material must pass around the tensioning roller 61 an angular distance of approximately 240°. However, it will be understood by those skilled the art that the angular distance around which the sheet 53 of the corresponding roll 55 must pass around the corresponding tensioning roller 61 may be greater than or less than 240°, and will depend on the tension to be induced in the corresponding sheet 53 as it is being drawn from the corresponding roll 55 by the cooperating action between the bale rotating rollers 24 of the bale chamber 25 and the rotating bale therein.

The pairs of the mounting plate brackets 59 are located on the chassis 3 with one pair of the mounting plate brackets 59, namely, the pair of the mounting plate brackets 59a located forwardly of the other pair of the mounting plate brackets, namely, the pair of the mounting plate brackets 59b. The roll 55a, is located between the pair of the forward mounting plate brackets 59a and to the right-hand side of the compartment 57, while the roll 55b is located in the rearward pair of the mounting plate brackets 59b and to the left-hand side of the rearward mounting plate brackets 59b, when the baler 8 is viewed from the forward end thereof. The rolls 55a and 55b are located between the forward and rearward pairs of mounting plate brackets 59a and 59b, respectively, so that the end edges 63 of the rolls 55 overlap each other for in turn ensuring that the inner side edges 56a of the sheets 53 of the wrapping material from the rolls 55 when applied to the circumferential surface 51 of the rotating bale 2 in the bale chamber 25 during circumferential wrapping of the rotating bale 2 overlap each other by the distance s. In this embodiment of the invention locators (not shown) are provided for locating the rolls 55 on the freely rotatable rollers 60 and the tensioning rollers 61, so that the overlap between the end edges 63 of the rolls 55 remain substantially constant.

A dispensing means comprising a dispensing mechanism 65 draws the sheets 53 of wrapping material from the rolls 55 thereof along a path of movement 68 and dispenses the sheets 53 into the bale chamber 25 for circumferentially wrapping the rotating bale 2 therein, see Fig. 10. The dispensing mechanism 65 dispenses the sheets of wrapping material into the bale chamber 25 through a gap 74 defined between a pair of the bale rotating rollers 24, namely, the bale rotating rollers 24e and 24f located in the closure segment 16. The dispensing mechanism 65 comprises an elongated driven roller 66 and a cooperating pinch roller 67 extending parallel to each other and parallel to the main central axis 27 defined by the bale chamber 25. The driven and pinch rollers 66 and 67 are rotatably mounted in bearings (not shown) mounted in spaced apart first carrier plates 69 extending upwardly and forwardly from the respective opposite side walls 20 of the closure segment 16. The driven roller 66 and the pinch roller 67 are located substantially vertically above the gap 74, and aligned therewith. The dispensing mechanism 65 is configured for initially drawing the sheets 53 of the wrapping material from the rolls 55 into the bale chamber 25 through the gap 74, as will be described below, until the sheets 53 of the wrapping material become engaged between the bale rotating rollers 24 and the rotating bale 2 in the bale chamber 25. At which stage the cooperating action between the bale rotating rollers 24 and the rotating bale 2 commence to pull the sheets 53 of the wrapping material from the rolls 55 through the dispensing mechanism 65 at a faster rate than the sheets are initially fed by the dispensing mechanism 65.

The driven roller 66 is driven by a belt drive transmission comprising a transmission belt 70 extending around a drive pulley 71 mounted fast on the shaft 26 of one of the bale rotating rollers 24 and a driven pulley 72 mounted on the driven roller 66 for transmitting drive from the corresponding bale rotating roller 24 to the driven roller 66. The driven pulley 72 is coupled to the driven roller 66 through a sprag clutch 73, which is configured to transmit drive from the driven pulley 72 to the driven roller 66 until the driven roller 66 is rotated at a faster speed than it is being driven by the driven pulley 72 as a result of the sheets 53 of the wrapping material being drawn from the rolls 55 by the cooperating action of the bale rotating rollers 24 and the rotating bale 2 in the bale chamber 25. Once the sheets 53 of wrapping material are being drawn into the bale chamber 25 through the driven and pinch rollers 66 and 67 at a speed faster than the driven roller 66 is being driven by the driven pulley 72, the sprag clutch 73 commences to slip in order to allow the driven and pinch rollers 66 and 67 to freewheel and to rotate at a speed corresponding to the speed at which the sheets 53 of the wrapping material are being drawn from the rolls 55 thereof by the cooperating action between the bale rotating rollers 24 and the rotating bale 2 in the bale chamber 25. A disc 75 of a disc brake system 76 is mounted fast on a shaft 77 of the driven roller 66 for braking the driven roller 66 for a purpose described below.

A main support element, in this embodiment of the invention an elongated rotatably mounted main support roller 78 for supporting the overlapping sheets 53 is located upstream of the driven and pinch rollers 66 and 67 of the dispensing mechanism 65 in the path of movement 68 of the sheets 53, and in this embodiment of the invention is located substantially directly vertically above the driven and pinch rollers 66 and 67, so that the dispensing mechanism 65 is located between the main support roller 78 and the gap 74 between the bale rotating rollers 24e and 24f into the bale chamber 25. The main support roller 78 extends between a pair of spaced apart second carrier plates 79 and extends parallel to the main central axis 27 defined by the bale chamber 25. The second carrier plates 79 extend upwardly from the respective side walls 20 of the closure segment 16, and the main support roller 78 is freely rotatably mounted in bearings (not shown) in the second carrier plates 79. The main support roller 78 supports the sheets 53 in their respective overlapping relationship, so that the sheets 53 are fed between the cooperating driven and pinch rollers 66 and 67 and in turn through the gap 74 onto the circumferential surface 51 of the rotating bale 2 in the bale chamber 25 in the appropriate overlapping relationship.

An intermediate support element, in this embodiment of the invention an elongated intermediate support roller 80 extends between carrier brackets 82 mounted on the first carrier plates 69 and parallel to the main central axis 27 defined by the bale chamber 25, and is freely rotatably mounted in bearings (not shown) in the carrier brackets 82. The intermediate support roller 80 is located in the path of movement 68 of the sheets 53 intermediate the main support roller 78 and the rolls 55 of the sheets 53 of wrapping material in the roll accommodating compartment 57. The intermediate support roller 80 is provided for engaging and supporting the sheets 53 of the wrapping material as the sheets 53 merge together on the intermediate support roller 80 with the adjacent inner side edges 56a thereof overlapping each other, so that the sheets 53 on reaching the main support roller 78 are appropriately overlapped.

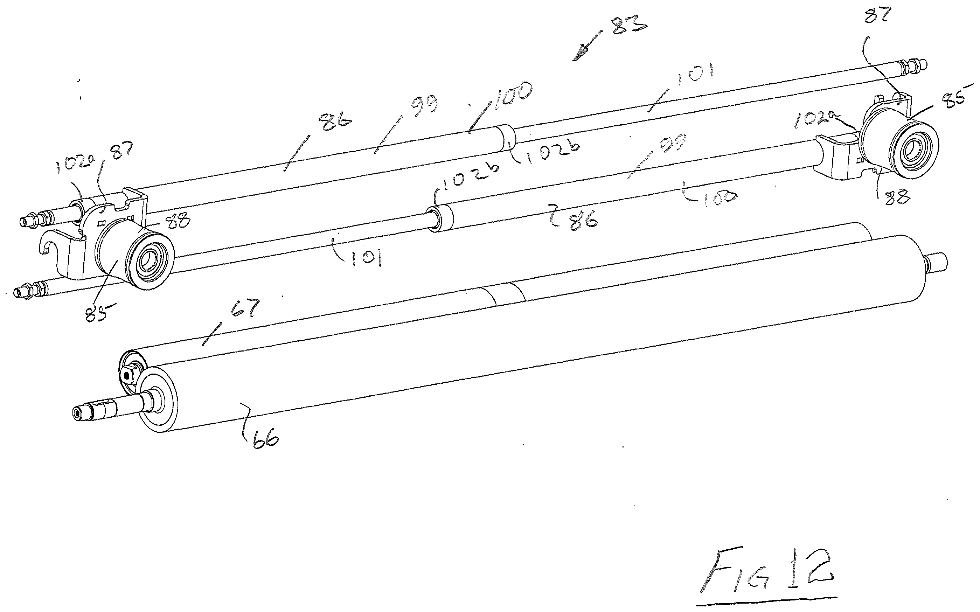

A bundling means comprising a bundling mechanism 83 is provided for bundling the two sheets 53 of the wrapping material together to form a single bundled portion 84 thereof of width less than the combined width of the overlapping sheets 53 between the outer side edges 56b of the outermost sheets 53, see Figs. 12 to 16. The single bundled portion 84 comprises a single bundled portion 84 of transverse cross-sectional width t in a direction parallel to the main central axis 27 defined by the bale chamber 25 typically of approximately 14mm. The bundling mechanism 83 is located below the main support roller 78 and above the dispensing mechanism 65 to form the single bundled portion 84 upstream of the dispensing mechanism 65. The main support roller 78, the bundling mechanism 83 and the dispensing mechanism 65 are substantially vertically aligned with each other and with the gap 74 defined between the bale rotating rollers 24e and 24f.

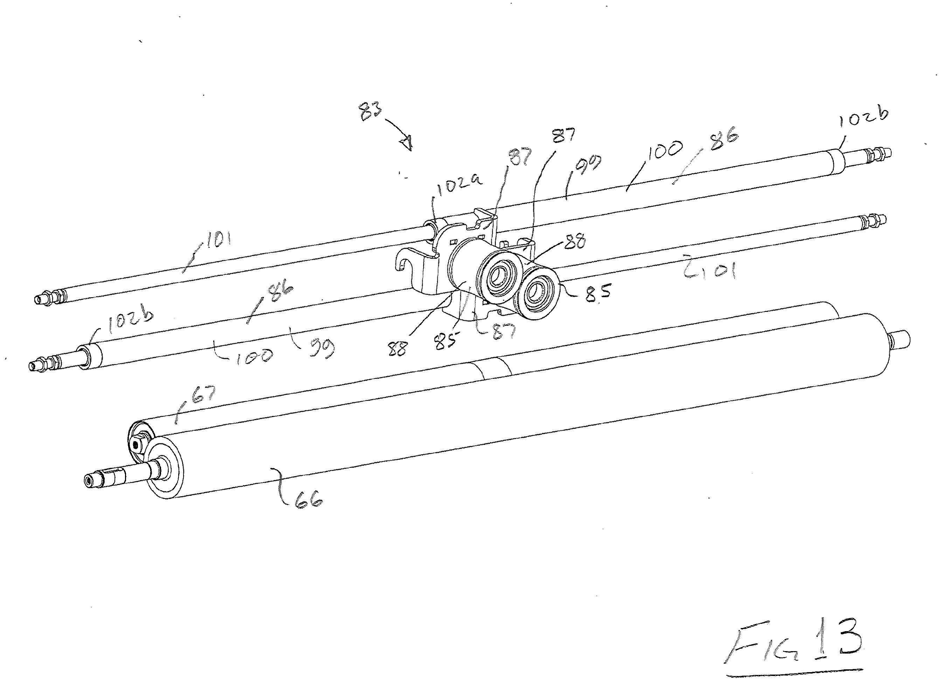

The bundling mechanism 83 comprises a pair of bundling elements, in this case, a pair of rotatably mounted bunding rollers 85, see in particular Figs. 12 and 13. The bundling rollers 85 are freely rotatably mounted on respective mounting brackets 87, which in turn are mounted on respective first urging means, in this case provided by respective bundling element actuators 86. The bundling element actuators 86 are described in detail below. The bundling rollers 85 are located intermediate the main support roller 78 and the driven and pinch rollers 66 and 67 of the dispensing mechanism 65, and are located substantially in vertical alignment with the main support roller 78 and the driven and pinch rollers 66 and 67.

The bundling rollers 85 are urgeable by the bundling element actuators 86 from an inoperative state illustrated in Figs. 12 and 15 spaced apart from each other and spaced apart outwardly from the path of movement 68 of the sheets 53 of the wrapping material and from the outer side edges 56b of the outermost sheets 53, towards each other in a direction transversely of the path of movement 68 of the sheets 53 to an operative state illustrated in Figs. 13, 14 and 16 with the bundling rollers 85 substantially adjacent each other for bundling the two sheets 53 together to form the single bundled portion 84. In the operative state, the bundling rollers 85 are located substantially midway between the respective inoperative states thereof and substantially midway between the side walls 20 of the closure segment 16, so that the single bundled portion 84 is formed relative to the bale chamber 25 approximately midway between the opposite end walls 17, 18 and 20 defining the opposite ends of the bale chamber 25. A groove 88 of arcuate cross-section extends around the periphery of the bundling rollers 85 for engaging the outer side edges 56b of the sheets 53. The bundling rollers 85 are mounted on the respective bundling element actuators 86 relative to the sheets 53 of the wrapping material, so that as the bundling rollers 85 are being urged from the inoperative state to the operative state, the bundling rollers 85 engage the outer side edges 56b of the sheets 53 for bundling the sheets 53 together to form the single bundled portion 84.

The bundling element actuators 86 are operated to urge the bundling rollers 85 from the inoperative state to the operative state to bundle the two sheets 53 together to form the single bundled portion 84 as the circumferential wrapping of the bale 2 currently in the bale chamber 25 is nearing completion. The formed single bundled portion 84 comprises a downstream end 84a and an upstream end 84b. The downstream end 84a of the single bundled portion 84 forms a single bundled tail portion 84a which is wrapped onto the bale 2 currently in the bale chamber 25 to complete circumferential wrapping of the bale 2 in the bale chamber 25. The upstream end 84b of the single bundled portion 84 forms the beginning of a single bundled lead-in portion 90 of the two sheets 53 of wrapping material for commencing the circumferential wrapping of the next bale 2 to be circumferentially wrapped in the bale chamber 25.

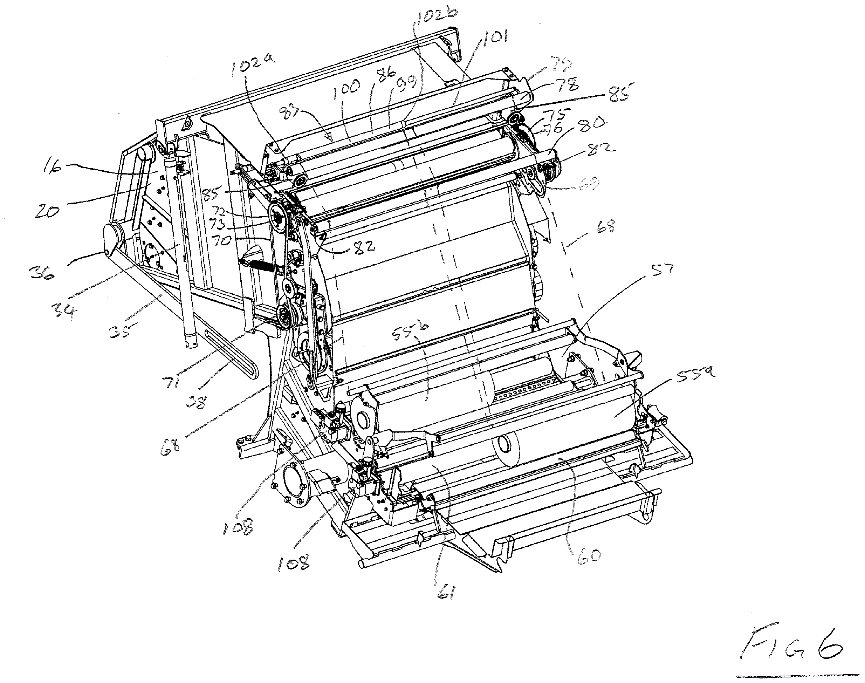

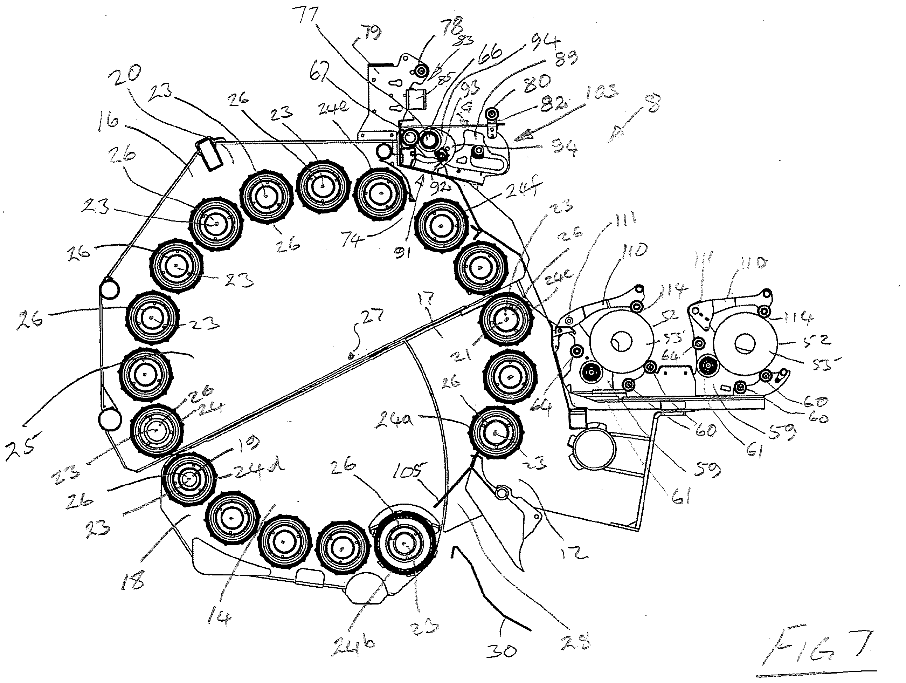

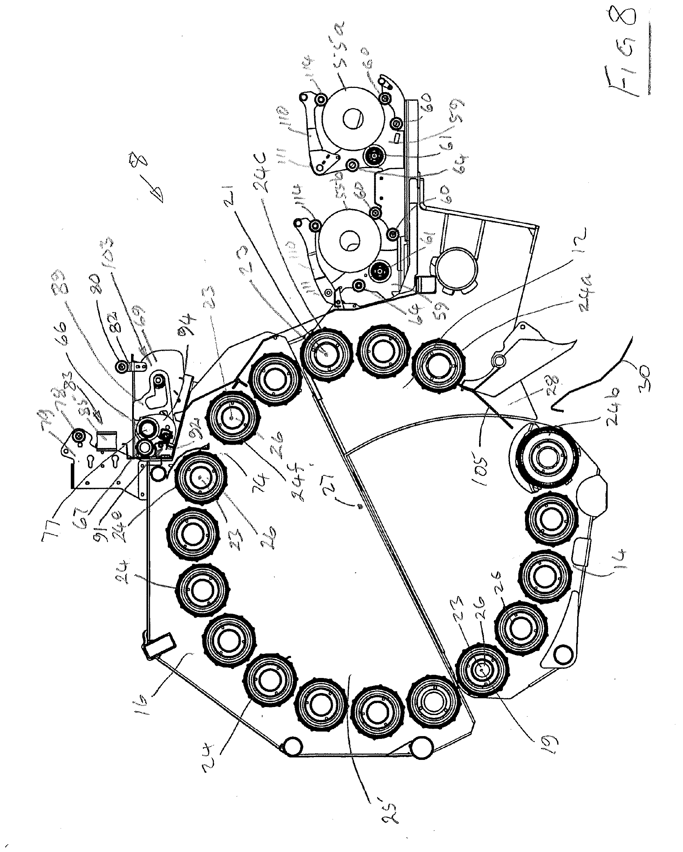

A severing means for severing the sheets 53 of wrapping material circumferentially wrapped onto the bale 2 currently in the bale chamber 25 from the rolls 55 on completion of circumferential wrapping of the bale is provided. The severing means comprises a severing mechanism 91 located beneath the cooperating driven and pinch rollers 66 and 67 of the dispensing mechanism 65 and above the bale rotating rollers 24e and 24f of the baler 8, see Figs. 6, 7 and 13 to 15. The severing mechanism 91 comprises an elongated blade 92 secured to and extending along an elongated carrier bar 93. The carrier bar 93 and the blade 92 extend transversely of the path of movement 68 of the sheets 53 of the wrapping material, and parallel to the main central axis 27 defined by the bale chamber 25. Opposite ends 96 of the carrier bar 93 are carried on and rigidly secured to respective pivot plates 94. The pivot plates 94 are pivotally mounted on the shaft 77 of the driven roller 66 of the dispending mechanism 65 adjacent the opposite ends of the driven roller 66, and are pivotal about the shaft 77 for pivoting the carrier bar 93 and in turn the blade 92 about the shaft 77 for urging the blade 92 from an inactive state illustrated in Figs. 7, 14 and 15 spaced apart from the path of movement 68 of the sheets 53 of the wrapping material in the direction of the arrow G through the path of movement of the sheets 52 to a severing state illustrated in Figs. 8 and 16 for severing the single bundled portion 84.

Control mechanisms 103 located on opposite sides of the baler 8 control the operation of the blade 42 for severing the single bundled portion 84 of the sheets 53. Latches 89 in the respective control mechanisms 103 latch the pivot plates 94 in a latching state with the blade 92 in the inactive state. The control mechanisms 103 are responsive to the formation of the singled bundled portion 84 of the sheets 53 being formed to release the latches 89, so that the blade 92 is urged from the inactive state to the severing state under the action of the springs (not shown) to sever the single bundled portion. A reset means in the control mechanism 103 which may comprise respective reset hydraulic actuators (not shown) acts on the pivot plates 94 to urge the pivot plates 94, the carrier bar 93 and the blade 92 in the return direction, opposite to the direction of the arrow G, until the blade 92 is in the active state, at which stage, the latches 89 engage the pivot plates 94 for retaining the blade 92 in the inactive state. The operation of such severing mechanism will be well known to those skilled in the art.

With the single bundled portion 84 severed by the blade 92, the beginning of the single bundled lead-in portion 90 extends downwardly from the driven and pinch rollers 66 and 67 of the dispensing mechanism 65, and terminates in a leading end 98, see Fig. 16, just below the driven and pinch rollers 66 and 67 ready for dispensing into the bale chamber 25 between the bale rotating rollers 24e and 24f on commencement of circumferential wrapping of the next formed bale 2 in the bale chamber 25.

The blade 92 defines an elongated cutting edge 97, which may comprise a straight cutting edge or a serrated cutting edge. In some embodiments of the invention the blade 92 may be a relatively short blade, centred on the carrier bar 93 from end-to-end thereof and of sufficient length for severing the single bundled portion 84, or the blade 92 may extend substantially the full length of the carrier bar 93, as it does in this embodiment of the invention, since the baler 8 is adapted for circumferentially wrapping a bale 2 in the bale chamber 25 with both the sheets 53 of the plastics film wrapping material, and net wrapping material. As will be understood by those skilled in the art, net wrapping material is not bundled, and thus, it is necessary that the blade extends the axial width of the bale chamber 25 for severing net wrapping material circumferentially wrapped onto the rotating bale 2 in the bale chamber 25 from a roll or rolls of the net wrapping material.

Returning now to the bundling element actuators 86 and referring in particular to Figs. 12 to 16, each bundling element actuator 86 comprises a hydraulic actuator, namely, a double-acting hydraulic ram 99. Each ram 99 comprises a cylinder 100 and a corresponding elongated piston rod 101 extending therethrough and slideably extending through respective opposite end caps 102 of the cylinder 100. The piston rod 101 of each ram 99 extends between and is secured in the second carrier plates 79 and extends parallel to the main central axis 27 defined by the bale chamber 25. The overall length of the cylinder 100 of each ram 99 is equal to approximately half the length of the corresponding piston rod 101 between the second carrier plates 79. A piston (not shown) is mounted fast on the piston rod 101 of each ram 99 within the cylinder 100 thereof, so that when pressurised hydraulic fluid is applied to one end of the cylinder 100 of the corresponding ram 99, the cylinder 100 is urged along the piston rod 101 thereof in one direction, and when pressurised hydraulic fluid is applied to the other end of the cylinder 100, the cylinder 100 is urged along the corresponding piston rod 101 in the opposite direction.

The cylinder 100 of each ram 99 is configured to slide along the corresponding piston rod 101 from one end of the piston rod 101 with one of the end caps 102 thereof adjacent one of the second carrier plates 79, to the other end of the piston rod 101 with the other one of the end caps 102 of the cylinder 100 adjacent the other one of the second carrier plates 79. The bundling rollers 85 are freely rotatably mounted on the mounting brackets 87 secured to the cylinders 100 of the respective rams 99 adjacent corresponding ones of the end caps, namely, the end caps 102a thereof. Thus when the rams 99 are in a first state thereof, illustrated in Figs. 1, 6, 12 and 15, with the end caps 102a of the cylinders 100 on the corresponding piston rods 101 adjacent the respective second carrier plates 79, the bundling rollers 85 are located adjacent the respective second carrier plates 79 in the inoperative state thereof. Accordingly, by urging the cylinders 100 of the respective rams 99 along the corresponding piston rods 101 from the first state thereof, to a second state thereof, illustrated in Figs. 13, 14 and 16, with the end caps 102b of respective cylinders 100 adjacent the second carrier plates 79, the bundling rollers 85 are urged from the inoperative state to the operative state adjacent each other. In this embodiment of the invention the bundling element actuators 86 are adapted to urge the bundling rollers 85 into the operative state with the bundling rollers 85 substantially midway between the path of movement 68 of the sheets 53 defined by the outer side edges 56b of the sheets 53, in other words midway between the second carrier plates 79.

The bundling element actuators 86 are operated to urge the bundling rollers 85 from the inoperative state into the operative state as the circumferential wrapping of the bale 2 currently in the bale chamber 25 is nearing completion to form the single bundled portion 84, and to retain the bundling rollers 85 in the operative state after the currently circumferentially wrapped bale 2 has been discharged from the bale chamber 25 and until the next bale to be formed in the bale chamber 25 is ready to be circumferentially wrapped. The bundling element actuators 86 retain the bundling rollers 85 in the operative state in order to produce the single bundled lead-in portion 90 as the driven and pinch rollers 66 and 67 of the dispensing mechanism 65 are operated to dispense the single bundled lead-in portion 90 into the bale chamber 25 to commence circumferential wrapping of the bale 2 now currently in the bale chamber 25. The bundling rollers 85 are retained by the bundling element actuators 86 in the operative state until the length of the single bundled lead-in portion 90 from the leading end 98 is of a predefined length. In this embodiment of the invention the predefined length of the single bundled lead-in portion is approximately 500mm, although it will be appreciated that the single bundled lead-in portion may be of any suitable length, typically, between 200mm and 1200mm.

Once the single bundled lead-in portion 90 has been formed to the predefined length, the bundling element actuators 86 are operated to urge the bundling rollers 85 from the operative state to the inoperative state, in order to allow the combined width of the sheets 53 to return to the full width of the path of movement 68 of the sheets 53, with the inner side edges 56a of the sheets 53 appropriately overlapping, and the outer side edges 56b of the sheets 53 positioned to extend around the axially opposite end edges 58 of the bale 2.

By operating the bundling element actuators 86 to retain the bunding rollers 85 in the operative state until the length of the single bundled lead-in portion 90 is of the predefined length, the risk of the leading end 98 of the single bundled lead-in portion 90 passing outwardly through the infeed opening 28 to the bale chamber 25 is reduced.

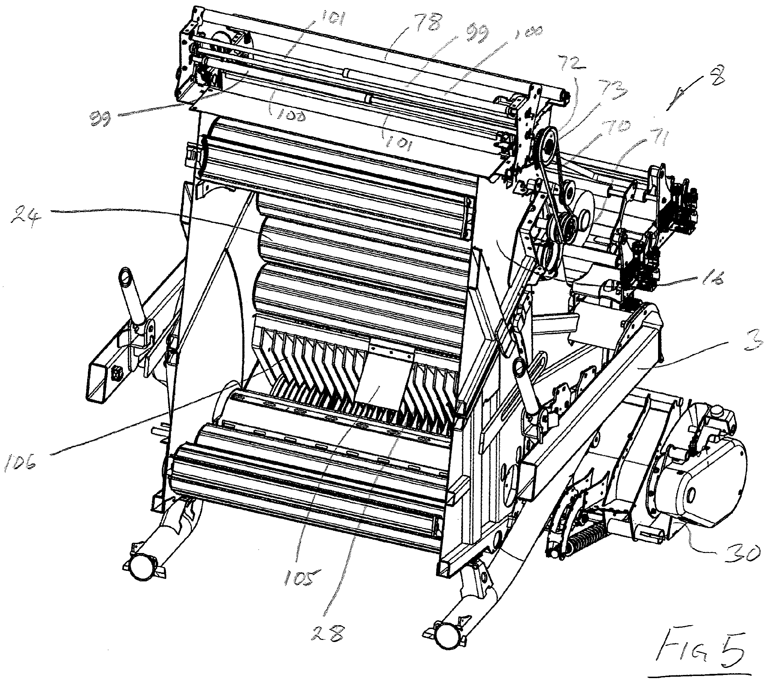

A guide means, in this embodiment of the invention a guide panel 105 of a rubberlike flexible resilient plastics material is located in the infeed opening 28 between the bale rotating rollers 24a and 24b for guiding the single bundled lead-in portion 90 and the leading end 98 thereof towards the circumferential surface 51 of the rotating bale 2 as the leading end 98 of the single bundled lead-in portion 90 passes the infeed opening 28 to avoid the single bundled lead-in portion 90 passing out of the bale chamber 25 through the infeed opening 28, see Figs. 4 and 5. The guide panel 105 is rigidly secured to a comb 106 of the crop pick-up and feed system 30, and extends downwardly and inwardly in the infeed opening 28 towards the bale chamber 25. The comb 106 is located adjacent the infeed opening 28 for stripping crop material from a chopping rotor 107 of the crop pick-up and feed system 30 as will be well known to those skilled in the art, see in particular Figs. 4 and 5. The guide panel 105 is located substantially midway between the side walls 17 of the fixed segment 12 in order to engage the leading end 98 of the single bundled lead-in portion 90 as it passes the infeed opening 28. In this embodiment of the invention the guide panel 105 is of width in a direction parallel to the main central axis 27 defined by the bale chamber 25 of approximately 16% of the width of the infeed opening 28 in the direction parallel to the main central axis 27, and in this case, is of width of approximately 200mm.

Turning now to the tensioning rollers 61 in the roll accommodating compartment 57 for tensioning the sheets 53 of the wrapping material as the sheets 53 are being drawn from the rolls 55, a hydraulic brake acts on each tensioning roller 61 to apply a braking load to rotation of the corresponding tensioning roller 61, to in turn control the tension in the sheets 53 as the sheets are being drawn from the rolls 55. In this embodiment of the invention each hydraulic brake comprises an hydraulic pump 108 operably connected to the corresponding tensioning roller 61, so that as the tensioning roller 61 rotates the corresponding hydraulic pump 108 is operated to pump hydraulic fluid therethrough. The hydraulic fluid from the hydraulic pumps 108 is passed through an adjustable flow control valve (not shown) by adjusting the flow rate of hydraulic fluid through the adjustable flow control valve, the tension applied to the sheets 53 of the wrapping material by the tensioning rollers 61 is adjusted.

When the sheets 53 are being drawn from the respective rolls 55 by the driven and pinch rollers 66 and 67 of the dispensing mechanism 65 to initially deliver the single bundled lead-in portion 90 of the sheets 53 into the bale chamber 25, the adjustable flow control valve is operated to provide no resistance to the flow of hydraulic fluid therethrough, in order to provide no resistance to the tensioning rollers 61, so that the sheets 53 are drawn from the rolls 55 by the driven and pinch rollers 66 and 67 with minimal resistance and therefore minimal tension. Once the single bundled lead-in portion 90 and in turn the sheets 53 are being drawn into the bale chamber 25 by the cooperating action of the bale rotating rollers 24 and the rotating bale 2, the resistance to flow of hydraulic fluid through the adjustable flow control valve (not shown) is increased in order to induce an appropriate tension in the sheets 53 as they are being wrapped onto the circumferential surface 51 of the rotating bale 2. The resistance to flow of hydraulic fluid through the adjustable flow control valve (not shown) is selectable, in order to select the tension with which the sheets 53 of the wrapping material are to be wrapped onto the circumferential surface 51 of the rotating bale 2 in the bale chamber 25 when the sheets 53 are being drawn into the bale chamber 25 by the cooperating action of the bale rotating rollers 24 and the rotating bale.

On the circumferential wrapping of the rotating bale in the bale chamber 25 approaching completion, the bundling element actuators 86 are operated to urge the bundling rollers 85 from the inoperative state to the operative state to commence forming the single bundled portion 84. On the single bundled portion 84 being of sufficient length to form the single bundled tail portion 84a and the beginning of the single bundled lead-in portion 90, severing of the single bundled portion 84 is carried out. The retaining latches 89 of the severing mechanism 91 are urged from the retaining states thereof to release the blade 92 from the inactive state thereof. The springs (not shown) acting on the pivot plates 94 urge the pivot plates 94 in the direction of the arrow G about the shafts 77 of the driven roller 66 of the dispensing mechanism 65, to in turn urge the blade 92 from the inactive state to the severing state. Simultaneously, the adjustable flow control valve (not shown) is operated to prevent flow therethrough, thus resulting in the hydraulic pumps 108 effectively braking the tensioning rollers 61. Additionally, simultaneously with the blade 92 being urged from the inactive state to the severing state, the disc brake system 76 is operated to brake the driven roller 66 of the dispensing mechanism 65, in order to prevent further dispensing of the bundled lead-in portion 84 through the driven and pinch rollers 66 and 67 of the dispensing mechanism 65.

A pair of arms 110 pivotally carried on a shaft 111 extending between each of the pairs of the mounting plate brackets 59 carry freely rotatably mounted rollers 114 which bear the circumferential surface 52 of the corresponding roll 55 in order to avoid the roll 55 rotating at a speed faster than the speed at which the sheets 53 are being drawn from the roll 55 by the respective tensioning rollers 61.

In use, the combined baler/bale wrapper 1 is hitched to a tractor (not shown) and the gear box 49 of the combined baler/bale wrapper 1 is connected to the power take-off shaft of the tractor through a Cardan shaft. The hydraulic system (not shown) of the combined baler/bale wrapper 1 is connected to the hydraulic system of the tractor for powering the hydraulic system of the combined baler/bale wrapper 1.

The combined baler/bale wrapper 1 is then towed by the tractor along a sward of crop material in conventional manner. The crop material is picked-up from the sward by the crop pick-up and feed system 30 and fed into the bale chamber 25 through the infeed opening 28. The crop material is rotated, pressed and formed into a round bale 2 in the bale chamber 25. On completion of the formation of the bale in the bale chamber 25, the formed rotating bale 2 in the bale chamber 25 is circumferentially wrapped in the bale chamber 25 with the sheets 53 of the wrapping material from the rolls 55 thereof and with the inner side edges 56a of the sheets 53 overlapping, and the outer side edges 56b of the sheets 53 extending around the end edges 58 of the rotating bale 2.

As circumferential wrapping of the rotating bale currently in the bale chamber 25 is nearing completion, the bundling rollers 85 are urged from the inoperative state to the operative state by the bundling element actuators 86 to bundle the sheets 53 together into the single bundled portion 84 with the downstream portion thereof forming the single bundled tail portion 84a to complete circumferential wrapping of the bale currently in the bale chamber 25, and the upstream portion 84b of the single bundled portion 84 forming the beginning of the single bundled lead-in portion 90 for the next bale to be circumferentially wrapped in the bale chamber 25. On completion of circumferential wrapping of the bale currently in the bale chamber 25, the single bundled portion 84 is severed intermediate the ends thereof by the severing mechanism 91 with the downstream portion of the single bundled portion 84 forming the tail portion 84a which is circumferentially wrapped onto the rotating bale 2 currently in the bale chamber 25 to complete circumferential wrapping of the bale. The severing mechanism 91 severs the single bundled portion 84 between the driven and pinch rollers 66 and 67 of the dispensing mechanism 65 and the bale rotating rollers 24e and 24f, so that the beginning of the single bundled lead-in portion 90 for commencing circumferential wrapping of the next bale in the bale chamber 25 is engaged between the driven and pinch rollers 66 and 67 with the leading end 98 of the single bundled lead-in portion 90 depending downwardly from the driven and pinch rollers 66 and 67.

The bundling rollers 85 are retained in the operative state by the bundling element actuators 86 until the next bale to be formed in the bale chamber 25 is ready to be circumferentially wrapped, and are retained in the operative state until the single bundled lead-in portion 90 has been formed to the predefined length, in this case of approximately 500mm. At which stage the bundling element actuators 86 are operated to urge the bundling rollers 85 from the operative state to the inoperative state, in order to allow the sheets 53 of the wrapping material spread transversely to their full combined width between the outer side edges 56b thereof on the intermediate support roller 80 and on the main support roller 78. The single bundled lead-in portion 90 may be formed to the predefined length while the driven and pinch rollers 66 and 67 of the dispensing mechanism 65 are dispensing the single bundled lead-in portion 90 into the bale chamber 25, or the single bundled lead-in portion 90 may not be formed to the predefined length until the single bundled lead-in portion 90 is being drawn into the bale chamber 25 by the cooperating action between the bale rotating rollers 24 and the rotating bale 2 in the bale chamber 25.

At the beginning of a baling session, if a leading end of an upstream portion 84b of a single bundled portion 84 of the sheets 53 of the wrapping material from a previous baling session is not engaged between the driven and pinch rollers 66 and 67 of the dispensing mechanism 65 ready to form the beginning of a single bundled lead-in portion 90 for the first bale of the new baling session to be circumferentially wrapped in the bale chamber 25, two of the rolls 55 of the wrapping material are located in the bale accommodating compartment 57. One of the rolls 55a is located between the forward pair of the mounting plate brackets 59a and to the right thereof, and the other one of the rolls 55b is located between the rearward pair of mounting plate brackets 59b and to the left thereof when viewed from the forward end of the baler 8 with the end edges 63a of the rolls 55 overlapping.

With the bundling rollers in the inoperative state the sheets 53 of the wrapping material are individually and manually drawn from the rolls 55 with the sheets 53 being drawn from the top of the circumferential surface 52 of each roll 55. The sheets 53 are drawn downwardly from the tops of the rolls 55 towards the corresponding tensioning roller 61 and are passed beneath and around the corresponding tensioning roller 61. The sheets 53 of the wrapping material are then drawn upwardly from the corresponding tensioning rollers 61 by the corresponding idler rollers 64. The sheets 53 are then drawn over the intermediate support roller 80 and in turn over the main support roller 78 with the inner side edges 56a thereof overlapping. The two sheets are then manually bundled together to form the beginning of a single bundled lead-in portion 90, which is then passed between the driven and pinch rollers 66 and 67 of the dispensing mechanism 65.

With the single bundled portion 84 of the sheets 53 of the wrapping material located between the driven and pinch rollers 66 and 67 to form the beginning of the single bundled lead-in portion 90, the combined baler/bale wrapper 1 is ready for operation. If not already hitched to a tractor, the combined baler/bale wrapper 1 is hitched to the tractor by the coupler 7 and the power take-off shaft of the tractor is connected to the gear box 49 by a Cardan shaft, and the hydraulic system of the combined baler/bale wrapper 1 is connected to the hydraulic system of the tractor.

On connection of the hydraulic system of the combined baler/bale wrapper 1 to that of the tractor, the bundling rollers 85 are automatically urged by the bundling element actuators 86 from the inoperative state to the operative state for engaging the already manually formed single bundled portion therebetween, so that when circumferential wrapping of the first bale in the bale chamber 25 is commenced, the bundling rollers 85 are in the operative state by the bundling element actuators 86, and the single bundled lead-in portion 90 is dispensed into the bale chamber 25 by the driven and pinch rollers 66 and 67 of the dispensing mechanism 65 until the length of the single bundled lead-in portion 90 is formed to the predefined length. At that stage, the bundling element actuators 86 are operated to urge the bundling rollers 85 from the operative state to the inoperative state to allow the sheets 53 to spread transversely of the path of movement 68 thereof along the intermediate support roller 80 and the main support roller 78 with the inner side edges 56a of the sheets 53 overlapping, and the outer side edges 56b defining the path of movement 68 of the sheets 53. Accordingly, as the sheets 53 are being drawn into the bale chamber 25 by the cooperating action of the bale rotating rollers 24 and the rotating bale 2 in the bale chamber 25, the rotating bale is circumferentially wrapped in the bale chamber 25 with the inner side edges 56a of the sheets 53 of the wrapping material overlapping to the distance s, and the outer side edges 56b of the sheets 53 of the wrapping material extending around the end edges 58 of the bale 2 onto the radial ends 54.

Thereafter, circumferential wrapping of the rotating bale 2 in the bale chamber 25 continues until the circumferential wrapping thereof is substantially completed, at which stage, the bundling rollers 85 are urged by the bundling element actuators 86 from the inoperative state to the operative state in order to commence forming the single bundled portion 84. The single bundled portion 84 is then severed to form the downstream single bundled tail portion 84a which is circumferentially wrapped onto the bale 2 in the bale chamber 25, and the upstream single bundled portion 84b which forms the beginning of the single bundled lead-in portion 90 ready for circumferentially wrapping of the next bale to be circumferentially wrapped in the bale chamber 25.

The circumferentially wrapped bale is then discharged from the bale chamber 25 onto the bale wrapper 10 by operating the main rams 34 to operate the closure segment 16 from the closed bale forming state to the open state, and to operate the discharge segment 14 from the bale forming state to the discharge state. The circumferentially wrapped bale is then wrapped end-to-end on the bale wrapper 10.

In this embodiment of the invention the rolls 50 for end-to-end wrapping of the bale 2 in the bale wrapper 10 are of axial length of approximately 750mm. The rolls 55 of the sheets 53 of the wrapping material for circumferentially wrapping the rotating bale 2 in the bale chamber 25 are also of axial length of approximately 750mm. Additionally, the wrapping material of the rolls 50 and 55 are similar, so that the rolls 50 and 55 are interchangeable.

Although only two sheets 53 of the wrapping material have been described for circumferentially wrapping the rotating bale 2 in the bale chamber, it is envisaged that in some embodiments of the invention more than two sheets 53 of wrapping material may be provided, for example, three sheets or four sheets of wrapping material may be provided for circumferentially wrapping the rotating bale in the bale chamber 25, and in each case, the sheets of the wrapping material would be applied to the circumferential surface of the bale either side-by-side relative to each other, or with adjacent side edges of adjacent sheets overlapping each other. Additionally, if more than two sheets of wrapping material are provided for circumferentially wrapping the bale, the combined width of the sheets between the outer side edges of the outermost sheets would be in general greater than the axial length of the bale, so that the outer side edges of the two outermost sheets would extend around the axially opposite end edges 58 of the bale 2. Additionally, if three or more sheets were provided to circumferentially wrap the bale, the three or more sheets would be bundled together by the bundling means to form a single bundled lead-in portion, which may be a single bundled lead-in portion, or a single bundled lead-in portion of width less than the combined width of the sheets, or in other words, less than the axial length of the bale chamber along the central axis thereof. Thus, irrespective of the number of sheets of the wrapping material being applied to the rotating bale in the bale chamber 25, all the sheets would be combined together to form one single bundled lead-in portion, and preferably, a single bundled lead-in portion, which preferably would be of transverse width of approximately 14mm.

While the width of the single bundled lead-in portion has been described as being of approximately 14mm, it is envisaged that the width of the single bundled lead-in portion of the sheets may be of any suitable width, and typically, would be of width in the range of 5mm to 50mm, and preferably, would be of width in the range of 10mm to 30mm.

While an intermediate support roller 80 has been described as being located between the rolls 55 and the main support roller 78, it is envisaged that in some embodiments of the invention the intermediate support roller 80 may be dispensed with. It will of course be appreciated that any suitable means for rotatably supporting the rolls 55 in the roll accommodating compartment 57 may be used instead of the rotatably mounted rollers 60 and the tensioning rollers 61. Needless to say, any other suitable tensioning means for tensioning the sheets 53 may be provided other than the tensioning rollers 61, and it will also be appreciated that any other suitable braking means for tensioning the sheets 53, besides the braking means described, which comprises the hydraulic pumps driven by the respective tensioning rollers, which pump hydraulic fluid through an adjustable restrictor valve, may be provided.

While the sheets 53 have been described as being dispensed into the bale chamber 25 between the adjacent bale rotating rollers 24e and 24f in the closure segment 16, it will be readily apparent to those skilled in the art that the sheets 53 of the wrapping material may be dispensed into the bale chamber 25 between any suitable pair of bale rotating rollers 24 either in the closure segment or in the fixed segment. Indeed, in embodiments of the invention where the baler comprises only two segments, namely, a fixed segment and a closure segment, with each segment defining approximately 180° of the periphery of the bale chamber 25, and with the closure segment being pivotally coupled to the fixed segment adjacent an upper pivot axis and whereby the closure segment would depend downwardly from the upper pivot axis, it is envisaged that the sheets 53 of the wrapping material may be dispensed into the bale chamber between a pair of adjacent bale rotating rollers in the fixed segment thereof, or in the closure segment, or between two adjacent bale rotating rollers, one of which may be rotatably mounted in the fixed segment, and the other of which would be rotatably mounted in the closure segment.

While the bundling means has been described as comprising a pair of rotatably mounted bundling rollers, in some embodiments of the invention it is envisaged that the bundling means may be provided by bunding elements, which would not necessarily be rotatably mounted. For example, such non-rotatable bundling elements may comprise non-rotatable bundling elements having relatively smooth frictionless or low friction engagement surfaces for slideably engaging the outer side edges 56b of the sheets 53. It will also be appreciated that any other suitable first urging means for operating the bundling rollers or other elements between the inoperative state and the operative state may be provided besides hydraulically powered actuators. In some embodiments of the invention the actuators or actuator may be provided by one or more linear motors, or by a rotary motor with the output thereof converted to linear motion. It is also envisaged that in some embodiments of the invention the first urging means may comprise a single actuator which would operate the bundling elements between the operative and inoperative states by a linkage or other suitable mechanism. Additionally, while the actuators of the bundling elements have been described as being hydraulically powered, the actuators may be powered by any other suitable means, for example, the actuators may be pneumatically or electrically powered.

While not described, suitable sensors will be provided for monitoring the various different operational aspects of the combined baler/bale wrapper, as will be well understood by those skilled in the art. For example, sensors or other suitable monitoring means may be provided for monitoring the formation of the bale in the bale chamber, monitoring the length of the single bundled lead-in portion, monitoring the circumferential wrapping of the rotating bale in the bale chamber, monitoring the end-to-end wrapping of the bale on the bale wrapper and other aspects of the operation of the combined baler/bale wrapper, and a suitable signal processor, for example, a microprocessor or a microcontroller will be provided in the combined baler/bale wrapper for operating the various elements of the combined baler/bale wrapper in response to signals received from the relevant sensors or other monitoring means.

While the baler has been described as being a part of a combined baler/bale wrapper, it is envisaged that the baler may be provided on its own without a bale wrapper, and in which case, the circumferentially wrapped bale would be discharged from the baler, typically, onto the ground.

While the single bundled lead-in portion 90 formed by bundling the two sheets together has been described as being of a predefined length of approximately 500mm, it will be readily apparent to those skilled in the art that the single bundled lead-in portion 90 may be of any suitable length or predefined length. Typically, the predefined length of the single bundled lead-in portion will be of sufficient length so that the leading end of the single bundled lead-in portion will have passed the infeed opening to the bale chamber before the sheets of the wrapping material will have commenced to spread transversely relative to the direction of movement of the sheets on termination of bundling of the sheets. In other words, the predefined length of the single bundled lead-in portion will be determined by the circumferential length around the periphery of the bale chamber between the location at which the single bundled lead-in portion is fed into the bale chamber and the infeed opening to the bale chamber in the direction of rotation of the rotating bale. It is envisaged that the predefined length of the single bundled lead-in portion may range from 200mm to 1200mm.

While the baler has been described as comprising a roller baler, it will be readily apparent to those skilled in the art that the baler may comprise a belt baler, or a baler comprising a combination of belts and bale rotating rollers.

While the bale 2 has been described as being of a specific axial length and diameter, the bale may be of any other suitable axial length and diameter, and the axial length of the bale and the diameter of the bale will depend on the axial length of the bale chamber, while the diameter of the bale will be determined by the diameter of the bale chamber in the case of a roller baler, and on the set diameter to which the bale is to be formed in the case of a belt baler.

Needless to say, it will be appreciated that the width of the sheets of the wrapping material will be selected depending on the axial length of the bale and the number of sheets being used for circumferentially wrapping the bale, as well as the width of the overlap between adjacent sheets, whether or not the outer side edges of the outermost sheets are to extend around the end edges of the bale, and whether or not adjacent sheets are to overlap. It will also be appreciated that while a specific overlap has been described between the inner side edges of the sheets of wrapping material, other suitable or desired overlapping dimensions may be used.

While a specific severing mechanism has been described for severing the single bundled portion, any other suitable severing mechanism may be provided.

Additionally, while the baler has been described for baling crop material, it will be readily apparent to those skilled in the art that the baler may be used for baling any type of material which would be suitable for baling, for example, waste material or any other such baleable material.

While in the formation of the single bundled portion of the sheets of wrapping material, the single bundled portion has been described as forming a single bundled tail portion for use in terminating wrapping of the bale currently in the bale chamber, and a single bundled lead-in portion for the next bale to be circumferentially wrapped in the bale chamber, it is envisaged that in some embodiments of the invention the single bundled portion may be formed to only form a single bundled lead-in portion, and in which case it is envisaged that the severing means may be set to sever the single bundled portion at its leading end, so that the single bundled portion would only form the single bundled lead-in portion.

While the guide means for guiding the single bundled lead-in portion past the infeed opening for urging single bundled lead-in portion towards the circumferential surface of the rotating bale has been described as comprising a resilient guide plate, any suitable guide means may be provided. The single guide plate may be non-resilient, and may be resiliently mounted on the baler, and would be resiliently urged into the infeed opening towards the circumferential surface of the rotating bale, in order to urge the single bundled lead-in portion into engagement with the circumferential surface of the rotating bale. Additionally, while the guide plate has been described as being of width approximately 16% of the width of the infeed opening, the guide plate may be of any suitable width, and typically, would be of width less than the width of the infeed opening, in order to minimise impeding delivery of material to be baled into the bale chamber through the infeed opening. Typically, it is envisaged that the width of the guide plate would lie in the range of 10% to 20% of the width of the infeed opening.

## Claims

1. A method for circumferentially wrapping a bale (2) rotating about a rotational axis (27) in a bale chamber (25) of a baler (8), the method comprising dispensing at least two sheets (53) of wrapping material from respective rolls (55) thereof into the bale chamber (25) onto a circumferential surface (51) of the rotating bale (2) with the at least two sheets (53) located side-by-side, or with adjacent edges (56a) of adjacent sheets (53) thereof overlapping on the circumferential surface (51) of the rotating bale (2), each sheet (53) being of width less than the axial length of the bale (2), wherein the method further comprises bundling the at least two sheets (53) together to form a single bundled portion (84) adapted to form a single bundled lead-in portion (90) of width (t) less than the combined widths of the at least two sheets (53) of wrapping material, and initially feeding the single bundled lead-in portion (90) into the bale chamber (25) to commence circumferential wrapping of the bale (2).

2. A method as claimed in Claim 1 in which the at least two sheets (53) of the wrapping material are bundled together to form the single bundled lead-in portion (90) of width (t) in a direction substantially parallel to the rotational axis (27) of the rotating bale (2) less than the width of a single one of the at least two sheets (53) of the wrapping material, and preferably, the at least two sheets (53) are bundled together to form the single bundled lead-in portion (90) to have a width (*t*) lying in the range of 5mm to 50mm, and advantageously, a width (*t*) lying in the range of 10mm to 30mm, and ideally, a width (t) of approximately 14mm.

3. A method as claimed in Claim 1 or 2 in which the bundling of the sheets (53) together to form the single bundled lead-in portion (90) thereof comprises urging the outer side edges (56b) of the respective outermost sheets (53) of the at least two sheets towards each other to form the single bundled lead-in portion (90) at a location substantially midway between the outer side edges (56b) of the outermost sheets (53) of the at least two sheets so that the single bundled lead-in portion (90) is applied to the circumferential surface (51) of the rotating bale (2) in the bale chamber (25) substantially midway between the radial opposite ends (54) of the bale (2).

4. A method as claimed in any preceding claim in which the bundling of the at least two sheets (53) to form the single bundled portion (84) commences as the circumferential wrapping of a rotating bale currently in the bale chamber (25) is nearing completion, and the single bundled portion (84) is adapted to form a single bundled tail portion (84a) for circumferentially wrapping onto the bale currently in the bale chamber (25) to complete the circumferential wrapping thereof, and at least a part of the single bundled lead-in portion (90) for the next bale to be circumferentially wrapped in the bale chamber (25).

5. A method as claimed in any preceding claim in which the at least two sheets of the wrapping material circumferentially wrapped onto a bale currently in the bale chamber are severed from the rolls of the at least two sheets of the wrapping material adjacent the single bundled portion (84), and preferably, the at least two sheets (53) of wrapping material wrapped onto the bale currently in the bale chamber (25) are severed from the rolls (55) thereof intermediate the ends of the single bundled portion (90) to form the single bundled tail portion (84a) for the bale currently in the bale chamber (25) and at least the part of the single bundled lead-in portion (90) for the next bale (2) to be circumferentially wrapped in the bale chamber (25).

6. A method as claimed in any preceding claim in which the single bundled lead-in portion (90) of the at least two sheets (53) of wrapping material is guided towards the rotating bale (2) in the bale chamber (25) as the single bundled lead-in portion (90) passes an infeed opening (28) into the bale chamber (25) through which material to be baled is fed into the bale chamber (25).

7. A method as claimed in Claim 6 in which the single bundled lead-in portion (90) of the at least two sheets (53) of the wrapping material is guided towards the rotating bale (2) as the single bundled lead-in portion (90) passes the infeed opening (28) to the bale chamber (25) by a single guide means (105), and preferably, the single guide means (105) is of width in a direction parallel to the rotational axis (27) of the rotating bale (2) less than the width of the infeed opening (28) in a direction parallel to the rotational axis (27) of the rotating bale (2), and advantageously, the single guide means (105) is of width in the direction parallel to the rotational axis (27) of the rotating bale (2) in the range of 10% to 20% of the width of the infeed opening (28) in the direction parallel to the rotational axis (27) of the rotating bale (2), and ideally, not more than 16% of the width of the infeed opening (28) in the direction parallel to the rotational axis (27) of the rotating bale (2).

8. A method as claimed in any preceding claim in which the bale (2) is rotated in the bale chamber (25) of a roller baler (8) by a plurality of rotatably mounted bale rotating rollers (24) defining the bale chamber (25), and preferably, the single bundled lead-in portion (90) of the at least two sheets (53) of the wrapping material is dispensed into the bale chamber (25) through a gap (74) defined between a pair of the bale rotating rollers (24).

9. A baler comprising a bale chamber (25) adapted to rotate, press and form material into a cylindrical bale (2), the bale chamber (25) defining a main central axis (27) about which the bale is rotated therein, and a dispensing means (65) adapted to dispense at least two sheets (53) of wrapping material from respective rolls (55) thereof into the bale chamber (25) onto a circumferential surface (51) of a rotating bale (2) therein for circumferential wrapping of the bale (2) with the at least two sheets (53) located side-by-side, or with adjacent side edges (56a) of adjacent sheets (53) overlapping on the circumferential surface (51) of the bale (2), each sheet (53) being of width less than the axial length of the bale (2), and a bundling means (83) adapted to bundle the at least two sheets (53) together to form a single bundled portion (84) adapted to form a single bundled lead-in portion (90) of width (t) less than the combined width of the at least two sheets (53) for feeding initially into the bale chamber (25) to commence circumferential wrapping of the bale (2).

10. A baler as claimed in Claim 9 in which the bundling means (83) is adapted to bundle the at least two sheets (53) together to form the single bundled lead-in portion (90) to be of width less than the width of a single one of the at least two sheets (53), and preferably, the bundling means (83) is adapted to bundle the at least two sheets (53) together to form the single bundled lead-in portion (90) to have a width lying in the range of 5mm to 50mm, and advantageously, a width lying in the range of 10mm to 30mm, and ideally, a width of approximately 14mm.

11. A baler as claimed in Claim 9 or 10 in which the bundling means (83) is located upstream of the dispensing means (65) relative to the direction of movement of the sheets (53) for bundling the at least two sheets (53) together to form the single bundled lead-in portion (90) prior to being dispensed by the dispensing means (65) into the bale chamber (25).

12. A baler as claimed in any of Claims 9 to 11 in which the bundling means (83) comprises a pair of the bundling elements (85) urgeable from respective inoperative states thereof spaced apart from each other and from the adjacent corresponding outer side edges (56b) of the outermost sheets (53) of the at least two sheets of wrapping material towards each other to respective operative states thereof, and preferably, the bundling elements (85) are urgeable into the operative state with the bundling elements (85) located adjacent each other, and advantageously, intermediate the respective inoperative states thereof, and ideally, the bundling elements (85) are urgeable into the operative state at a location substantially midway between the respective inoperative states thereof.

13. A baler as claimed in any of Claims 9 to 12 in which a severing means (92) is located downstream of the dispensing means (65) in the direction of movement of the sheets (53) of the wrapping material for severing the at least two sheets (53) thereof circumferentially wrapped onto a bale (2) currently in the bale chamber (25) from the rolls (55) thereof adjacent the single bundled portion (84), and preferably, the severing means (92) is adapted to sever the at least two sheets (53) of the wrapping material circumferentially wrapped onto the bale currently in the bale chamber from the rolls (55) of the at least two sheets (53) of the wrapping material intermediate the ends of the single bundled portion (84) to form a single bundled tail portion (84a) and at least a part of the single bundled lead-in portion (90) for the next bale to be circumferentially wrapped in the bale chamber (25).

14. A baler as claimed in any of Claims 9 to 13 in which a single guide means (105) is located adjacent a material infeed opening (28) through which the material to be baled is fed into the bale chamber (25), the guide means (105) being adapted for directing the single bundled lead-in portion (90) of the at least two sheets (53) of the wrapping material inwardly towards the circumferential surface (51) of the bale (2) as the single bundled lead-in portion (90) is passing the infeed opening (28), and preferably, the single guide means (105) is of width in a direction parallel to the main central axis (27) defined by the bale chamber (25) less than the width of the infeed opening (28) in the direction parallel to the main central axis (27) defined by the bale chamber (25), and advantageously, the single guide means (105) is of width in the direction parallel to the main central axis (27) defined by the bale chamber (25) in the range of 10% to 20% of the width of the infeed opening (28) in the direction parallel to the main central axis (27) defined by the bale chamber (25), and ideally, the single guide means is of width in the direction parallel to the main central axis (27) defined by the bale chamber (25) not more than 16% of the width of the infeed opening (28) in the direction parallel to the main central axis (27) defined by the bale chamber (25).

15. A baler as claimed in any preceding claim in which the baler comprises a roller baler (8) comprising a plurality of rotatably mounted bale rotating rollers (24) defining the bale chamber (25), and preferably, the dispensing mechanism is adapted to dispense the bundled lead-in portion (90) of the at least two sheets (53) of the wrapping material into the bale chamber (25) through a gap (74) defined between a pair of the bale rotating rollers (24).
